(19) Europäisches Patentamt
European Patent Office
Office européen des brevets

(11) **EP 4 257 561 A1**

(12) **EUROPEAN PATENT APPLICATION**
published in accordance with Art. 153(4) EPC

(43) Date of publication:
**11.10.2023 Bulletin 2023/41**

(21) Application number: **21900699.6**

(22) Date of filing: **03.12.2021**

(51) International Patent Classification (IPC):
**C03B 8/00** (2006.01)      **C03B 19/00** (2006.01)

(52) Cooperative Patent Classification (CPC):
**C03B 19/00**

(86) International application number:
**PCT/JP2021/044446**

(87) International publication number:
**WO 2022/118950 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.12.2020   JP 2020202124**

(71) Applicant: **NIKON CORPORATION**
**Minato-ku**
**Tokyo 108-6290 (JP)**

(72) Inventor: **YOSHIMOTO Kohei**
**Tokyo 108-6290 (JP)**

(74) Representative: **Viering, Jentschura & Partner
mbB**
**Patent- und Rechtsanwälte**
**Grillparzerstraße 14**
**81675 München (DE)**

(54) **HOLDING MEMBER, GLASS MANUFACTURING DEVICE IN WHICH SAME IS USED, AND GLASS MANUFACTURING METHOD**

(57)    A holding member is used in a glass manufacturing apparatus that cools down a glass raw material that has been levitated by gas and has been heated and melted, and manufactures glass. The holding member includes a gas injection surface that includes a plurality of injection ports from which the gas is injected. The gas injection surface includes a first region and a second region, the first region including first injection ports that are some injection ports of the plurality of injection ports, the second region including second injection ports that are different from the first injection ports from among the plurality of injection ports. The first region is located inside the second region, when the gas injection surface is viewed from the top. An area of the injection ports per unit area of the first region is smaller than the area of the injection ports per the unit area of the second region. The area of the injection ports per the unit area of the first region is a ratio of the total of cross-sectional areas of the first injection ports to the area of the first region when the gas injection surface is viewed from the top. The area of the injection ports per the unit area of the second region is the ratio of the total of cross-sectional areas of the second injection ports to the area of the second region when the gas injection surface is viewed from the top.

FIG.3

**Description**

Technical Field

The present invention relates to a holding member, a glass manufacturing apparatus using the same, and a glass manufacturing method. The present invention claims the benefit of priority of Japanese Patent Application No. 2020-202124, filed on December 4, 2020, the contents of which are incorporated in the present application by reference in designated countries that allow documents to be incorporated by reference.

Background Art

For example, Patent Literature 1 discloses a method for manufacturing optical glass by using a laser levitation furnace. In such a laser levitation furnace, it is requested that a glass sample be stably levitated by using levitating gas.

Citation List

Patent Literature

Patent Literature 1: JP 2014-196236 A

Summary of Invention

A first aspect of the present invention is a holding member that is used in a glass manufacturing apparatus that cools down a glass raw material that has been levitated by gas and has been heated and melted, and manufactures glass, in which the holding member includes a gas injection surface that includes a plurality of injection ports from which the gas is injected, the gas injection surface includes a first region and a second region, the first region including first injection ports that are some injection ports of the plurality of injection ports, the second region including second injection ports that are different from the first injection ports from among the plurality of injection ports, the first region is located inside the second region, when the gas injection surface is viewed from a top, an area of the injection ports per unit area of the first region is smaller than the area of the injection ports per the unit area of the second region, the area of the injection ports per the unit area of the first region is a ratio of a total of cross-sectional areas of the first injection ports to the area of the first region when the gas injection surface is viewed from the top, and the area of the injection ports per the unit area of the second region is the ratio of the total of the cross-sectional areas of the second injection ports to the area of the second region when the gas injection surface is viewed from the top.

A second aspect of the present invention is a holding member that is used in a glass manufacturing apparatus that cools down a glass raw material that has been levitated by gas and has been heated and melted, and manufactures glass, in which the holding member includes a gas injection surface that includes a plurality of injection ports from which the gas is injected, the gas injection surface includes a first region and a second region, the first region including first injection ports that are some injection ports of the plurality of injection ports, the second region including second injection ports that are different from the first injection ports from among the plurality of injection ports, the first region is located inside the second region, when the gas injection surface is viewed from a top, the number of the injection ports per unit area of the first region is smaller than the number of the injection ports per the unit area of the second region, the number of the injection ports per the unit area of the first region is a ratio of the number of the first injection ports to an area of the first region when the gas injection surface is viewed from the top, and

the number of the injection ports per the unit area of the second region is the ratio of the number of the second injection ports to the area of the second region when the gas injection surface is viewed from the top.

A third aspect of the present invention is a holding member that is used in a glass manufacturing apparatus that cools down a glass raw material that has been levitated by gas and has been heated and melted, and manufactures glass, in which the holding member includes a gas introduction surface and a gas injection surface, the gas introduction surface including an introduction port from which the gas is introduced, the gas injection surface including a plurality of injection ports from which the gas that has been introduced from the gas introduction surface is injected, the gas injection surface includes a first region and a second region, the first region including first injection ports that are some injection ports of the plurality of injection ports, the second region including second injection ports that are different from the first injection ports from among the plurality of injection ports, the first region is located inside the second region, when the gas injection surface is viewed from a top, and the gas introduction surface has a protruding shape.

A fourth aspect of the present invention is a holding member that is used in a glass manufacturing apparatus that cools down a glass raw material that has been levitated by gas and has been heated and melted, and manufactures glass, in which the holding member includes a gas introduction surface and a gas injection surface, the gas introduction surface including an introduction port from which the gas is introduced, the gas injection surface including a first region and a second region, the first region including a plurality of injection ports from which the gas that has been introduced from the gas introduction surface is injected, the second region including an injection port from which the gas is injected, the first region is located inside the second region, when the gas injection surface is viewed from a top, the holding member includes a first portion and a second portion, the first portion being surrounded by a surface including a straight line that is perpendicularly drawn from the first region to the gas introduction surface, the second portion being surrounded by the surface including the straight line that is drawn from the second region to the gas introduction surface in a perpendicular direction, and a portion where a thickness of the first portion is greater than the thickness of the second portion is included, the thickness of the first portion being a length of the straight line that is drawn from a point in the first region to the gas introduction surface in a gravity direction, the thickness of the second portion being the length of the straight line that is drawn from the point in the second region to the gas introduction surface in the gravity direction.

A fifth aspect of the present invention is a holding member that is used in a glass manufacturing apparatus that cools down a glass raw material that has been levitated by gas and has been heated and melted, and manufactures glass, in which the holding member includes a gas introduction surface and a gas injection surface, the gas introduction surface including an introduction port from which the gas is introduced, the gas injection surface including a first region and a second region, the first region including a plurality of injection ports from which the gas that has been introduced from the gas introduction surface is injected, the second region including an injection port from which the gas is injected, the first region is located inside the second region, when the gas injection surface is viewed from a top, and an average thickness (K1) of the holding member between the first region and the gas introduction surface is greater than the average thickness (K2) of the holding member between the second region and the gas introduction surface.

A sixth aspect of the present invention is a glass manufacturing apparatus including the holding member described above.

A seventh aspect of the present invention is a glass manufacturing method including: a levitation process for blowing the gas onto the glass raw material from the injection ports of the holding member described above, and levitating the glass sample; a melting process for melting the glass raw material by irradiating the sample that has been levitated with a laser beam; and a cooling process for cooling down the glass raw material that has been melted.

Brief Description of Drawings

Fig. 1 is a schematic diagram of a glass manufacturing apparatus that includes a levitation furnace including a holding member according to the present embodiment.

Fig. 2 is a schematic diagram (a sectional view) illustrating a state where a sample levitated above the holding member is heated in Fig. 1.

Fig. 3 is a schematic diagram (a sectional view) of the holding member according to the present embodiment.

Fig. 4 is a partial schematic diagram (a top view) (no. 1) of a concave surface 1020 of a holding member 102 according to the present embodiment.

Fig. 5 is a schematic diagram (a sectional view) for explaining a shape of the concave surface 1020 of the holding member 102 according to the present embodiment.

Fig. 6 is a schematic diagram (a top view) (no. 1) for explaining a relationship between a concave surface and an injection port according to the present embodiment.

Fig. 7 is a schematic diagram (a top view) (no. 2) for explaining the relationship between the concave surface and the injection port according to the present embodiment.

Fig. 8 is a schematic diagram (a top view) (no. 3) for explaining the relationship between the concave surface and the injection port according to the present embodiment.

Fig. 9 is a partial schematic diagram (a top view) (no. 2) of the concave surface of the holding member according to the present embodiment.

Fig. 10 is a schematic diagram (a sectional view) (no. 1) of a holding member according to a second embodiment.

Fig. 11 is a schematic diagram (a sectional view) (no. 2) of a holding member according to the second embodiment.

Fig. 12 is a schematic diagram (a sectional view) (no. 3) of a holding member according to the second embodiment.

Fig. 13 is a schematic diagram (a sectional view) (no. 4) of a holding member according to the second embodiment.

Fig. 14 is a schematic diagram (a top view and a sectional view) (no. 1) of a holding member according to a third embodiment.

Fig. 15 is a schematic diagram (a top view and a sectional view) (no. 2) of a holding member according to the third embodiment.

Fig. 16 is a schematic diagram (a top view and a sectional view) (no. 3) of a holding member 123 according to the third embodiment.

Fig. 17 is a schematic diagram (a top view and a sectional view) (no. 4) of a holding member 124 according to the third embodiment.

Description of Embodiments

Embodiments of the present invention (hereinafter referred to as the "present embodiments") are described below. The present embodiments described below are examples for describing the present invention, and are not to be construed as limitations to the contents described below.

Note that in the drawings, the same element is denoted by the same reference sign, and a duplicate description is omitted. Furthermore, a positional relationship, such as up, down, left, or right, is based on the positional relationship illustrated in the drawings, unless otherwise specified. Moreover, a dimension ratio of the drawings is not limited to the illustrated ratio.

Furthermore, a term in combination with "rough" or "roughly" indicates the meaning of the term without "rough" or "roughly" within the common general knowledge of those skilled in the art, and also includes the meaning itself without "rough" or "roughly", and vice versa. For example, the term "circle" is not combined with "rough", but it is natural that the term also includes the meaning of a "rough circle", unless contrary to the gist of the invention.

Furthermore, a "top view" or "viewed from the top" refers to a plane viewed from a direction that is defined as an upper surface of the holding member 102 described later, when stationarily placed on a horizontal plane that is orthogonal to a gravity direction with a concave surface 1020 of the holding member 102 facing upward.

Furthermore, a "sectional view" or "viewed in a cross section" refers to a cross section that passes through a center or the center of gravity of the concave surface 1020, when stationarily placed on the horizontal plane that is orthogonal to the gravity direction with the concave surface 1020 of the holding member 102 facing upward.

<Holding Member 102 and Levitation Furnace according to First embodiment>

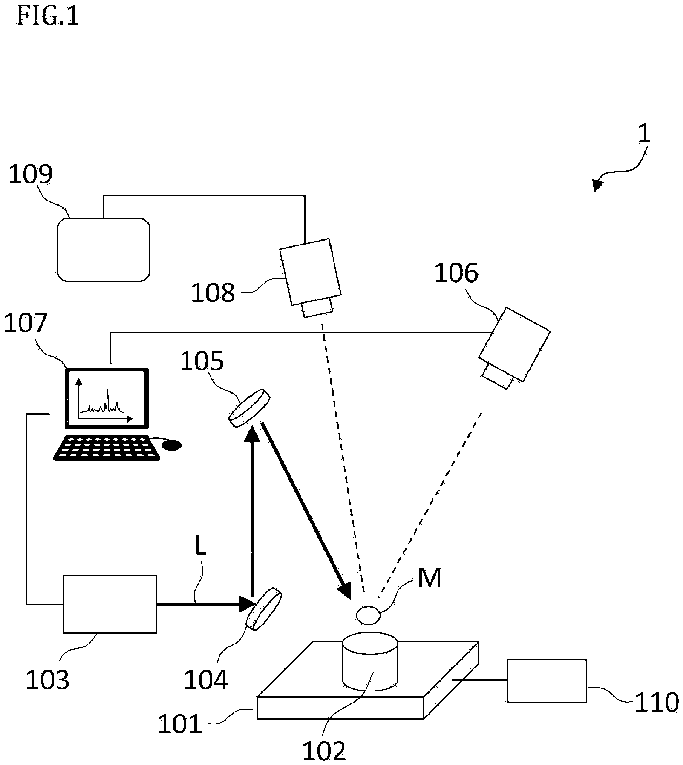

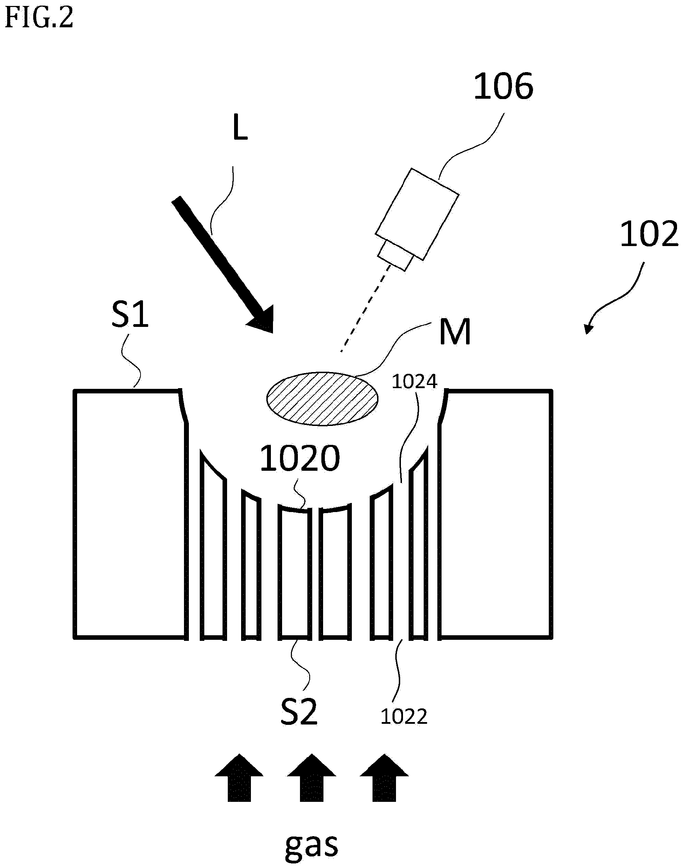

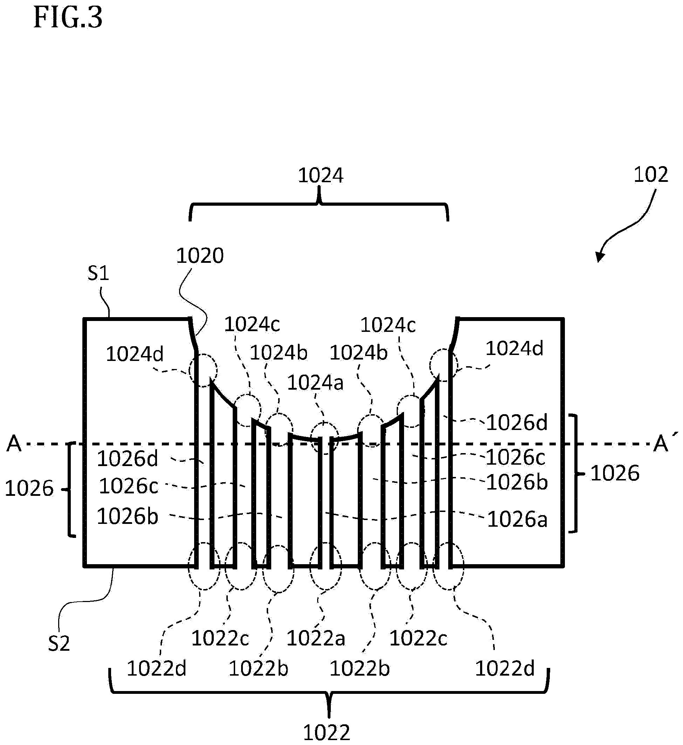

Fig. 1 is a schematic diagram of a glass manufacturing apparatus 1 that includes a levitation furnace including the holding member 102 according to the present embodiment, Fig. 2 is a schematic diagram (a sectional view) illustrating a state where a sample M levitated above the holding member 102 is heated in Fig. 1, and Fig. 3 is a schematic diagram (a sectional view) of the holding member 102 according to the present embodiment.

As illustrated in Fig. 1, the glass manufacturing apparatus 1 is an apparatus that manufactures optical glass and includes a gas jet type levitation furnace. The glass manufacturing apparatus 1 heats and melts a glass raw material in a state where the glass raw material has been levitated by using gas, and manufactures glass. The glass manufacturing apparatus 1 includes a levitation furnace that includes the holding member 102 that blows gas onto a sample M including the glass raw material, and levitates the sample M, a laser light source 103 that irradiates the levitated sample M with a laser beam L, a radiation thermometer 106 that measures the temperature of the levitated sample M, a computer 107 that controls an output of the laser light source 103 on the basis of temperature information relating to the radiation thermometer 106, and a gas flow rate regulator 110 that regulates a flow rate of gas to be supplied to the holding member 102.

In the glass manufacturing apparatus 1, the sample M that has been levitated above the holding member 102 that is disposed on a stage 101 is irradiated with the laser beam L to be heated in a non-contact manner. As a result of this, the sample M is melted, is formed into melt having a roughly spherical shape or a roughly ellipsoidal shape due to the surface tension of the sample M itself, and is levitated in this state. Then, the sample M is cooled down to be solidified, and is formed into optical glass.

The sample M is heated in a non-contact manner by irradiating the sample M with the laser beam L emitted from the laser light source 103, via a mirror 104 and a mirror 105. The temperature of the sample M that is heated due to irradiation with the laser beam L is monitored by the radiation thermometer 106. An output of the laser light source 103 is controlled by the computer 107 on the basis of temperature information relating to the sample M that has been monitored by the radiation thermometer 106. Furthermore, a state of the sample M is imaged by a CCD camera 108, and it is output to a monitor 109. Note that the laser light source 103 is not particularly limited, and examples include a carbon dioxide gas laser, a semiconductor laser, a fiber laser, a YAG laser, and the like.

A flow rate of gas to be fed into the holding member 102 is controlled by the gas flow rate regulator 110. Note that a type of gas is not particularly limited, and a publicly known type of gas can be appropriately employed. Specific examples of gas include oxygen, carbon dioxide, nitrogen, argon, air, and the like. Furthermore, a shape of a nozzle (not illustrated) that is connected to the holding member 102 is not particularly limited, and a publicly known method can be appropriately employed.

After the stably levitated sample M has been heated in a non-contact manner, the laser beam L is intercepted. As a result of this, melt (the sample M) is cooled down to be solidified, and optical glass is obtained.

As illustrated in Fig. 2, the holding member 102 includes a first surface S1 that includes a concave surface (a gas injection surface) 1020 that faces the sample M, and a second surface S2 that is located on an opposite side of the first surface S1 and serves as a gas introduction surface. The second surface S2 includes an introduction port 1022 from which gas is introduced, and the concave surface 1020 of the first surface S1 includes an injection port 1024 from which gas is injected. The introduction port 1022 supplies gas to the injection port 1024 on the concave surface 1020.

Furthermore, as illustrated in Fig. 3, the injection port 1024 is constituted by an injection port 1024a that is provided in a center portion of the first surface S1, and injection ports 1024b, c, and d that are provided in a peripheral portion. The number, shapes, and disposition of injection ports 1024 are not particularly limited, and suitable conditions can be appropriately selected. Gas is blown onto the sample M from the injection port 1024, and therefore the sample M can be stably levitated above the holding member 102.

Furthermore, it is preferable that the holding member 102 include a through-hole 1026 that connects the introduction port 1022 to the injection port 1024. Due to the through-hole 1026, gas that has been supplied from the introduction port 1022 that is provided on the second surface S2 is efficiently fed toward the injection port 1024 that is provided on the concave surface 1020 of the first surface S1. As an example, a cross section of a plane that is parallel to a gravity direction of the through-hole 1026 is a rectangle.

In addition, it can be said that the introduction port 1022 is an introduction port from which gas is introduced, and the injection port 1024 is an injection port from which gas is injected. In the present embodiment, for example, each of a plurality of injection ports 1024 that is included in the concave surface 1020 is connected to a single introduction port 1022.

In Fig. 3, each of a through-hole 1026a that connects an introduction port 1022a to the injection port 1024a, a through-hole 1026b that connects an introduction port 1022b to the injection port 1024b, a through-hole 1026c that connects an introduction port 1022c to the injection port 1024c, and a through-hole 1026d that connects an introduction port 1022d to the injection port 1024d is disposed.

In the present embodiment, all of the introduction ports 1022 are not always connected to all of the injection port 1024 by the through-holes 1026, and only some of the introduction ports 1022 may be connected to some of the injection port 1024 by the through-holes 1026.

Next, the disposition of the injection ports 1024 of the holding member 102 is further described.

<First General Example of Concave Surface 1020>

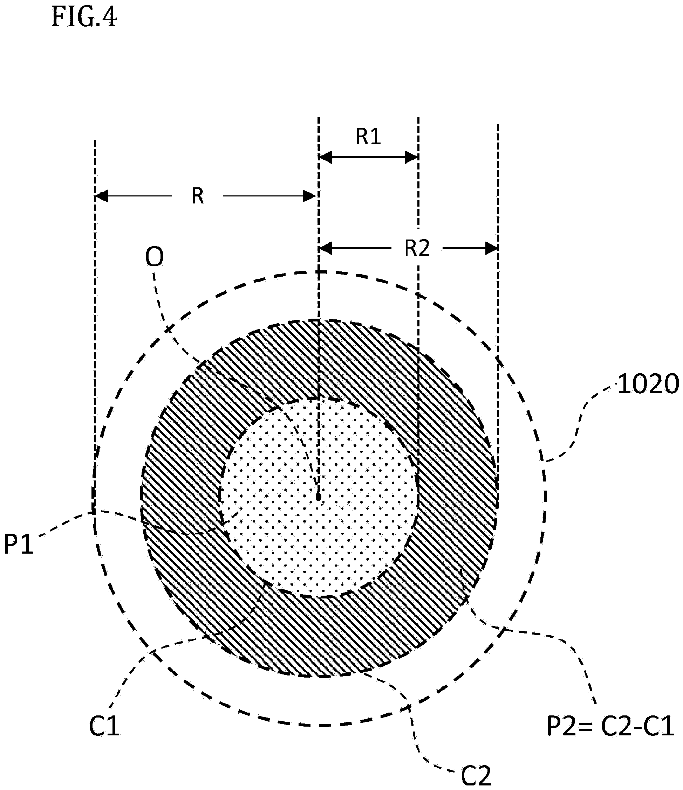

Fig. 4 is a partial schematic diagram (a top view) of the concave surface 1020 of the holding member 102 according to the present embodiment.

In the example illustrated in Fig. 4, the concave surface 1020 has a circular shape having a radius R with a center point O as a center, when viewed from the top. A circle having a radius R1 from the center point O of the circular shape is a first circle C1, and a circle having a radius R2 is a second circle C2. Note that a "center point" means a center of a circle in a case where a shape of the concave surface 1020 of the first surface S1 when viewed from the top is a circular shape, and the "center point" means the center of gravity in a case where a shape viewed from the top is an ellipsoidal shape or in a case where the shape is a polygon such as a rectangular shape.

Stated another way, when viewed from the top, the concave surface 1020 concentrically includes a region of the first circle C1, and a region of the second circle C2 having the radius R2 that is larger than or equal to the radius R1 of the first circle C1, and is adjacent. The concave surface 1020 includes a first region P1, which is the region of the first circle C1, and a second region P2, which is an annular region obtaining by excluding the region of first circle C1 from the region of the second circle C2. The first region P1 is a region that includes the center or the center of gravity, when the concave surface 1020 is viewed from the top. In other words, the first region P1 is located on an inner side (closer to the center or closer to the center of gravity) of the concave surface 1020 relative to the second region P2. Note that the radius R2 of the second circle C2 may be equal to the radius R of the concave surface 1020. Stated another way, the concave surface 1020 may be constituted by the first region P1 and the second region P2.

The first region P1 is a region that is at least part of a roughly circular region for which a radius from the center point O is r or less, when the concave surface 1020 is viewed from the top. Note that r < R. Furthermore, the second region P2 is a region that is at least part of a roughly annular region for which the radius of an inner circumference is r or more, when the concave surface 1020 is viewed from the top.

It is preferable that the first region P1 be a roughly circular region for which the radius from the center point O is 0.2R (0.2 times as large as the radius R) or less, in comparison with the radius R of the concave surface 1020, when viewed from the top, and it is more preferable that the radius from the center point O be 0.1R or less. Furthermore, it is preferable that the radius R1 be 1 to 3 mm. It is more preferable that a lower limit value of the radius R1 be 1.5 mm, and it is more preferable that an upper limit value be 2.5 mm.

In the second region P2, when viewed from the top, in comparison with the radius R of the concave surface 1020, the radius R2 that corresponds to the radius of an outer circumference of the annular region may be equal to the radius R, it is more preferable that the radius R2 be 0.9R (0.9 times as large as the radius R), and it is more preferable that the radius R2 be 0.8R or less. Furthermore, it is preferable that the radius R2 be 3 to 8 mm. It is more preferable that a lower limit value of the radius R2 is 4 mm, and it is more preferable that an upper limit value be 7 mm.

Note that it is sufficient if the second region P2 is located outside the first region P1, and the second region P2 may or may not be adjacent to the first region P1. A case where the regions are not adjacent to each other will be described later.

When viewed from the top, in a case where the concave surface 1020 has a circular shape, it is preferable that the radius R of the concave surface 1020 be 5 to 10 mm. It is more preferable that a lower limit of the radius R of the concave surface 1020 be 5.5 mm, and it is further preferable that the lower limit be 6.5 mm. It is more preferable that an upper limit of the radius R of the concave surface 1020 be 9.5 mm, and it is further preferable that the upper limit be 8.5 mm. The radius R of the concave surface 1020 falls under the range described above, and therefore the sample M can be more stably levitated, and as a result of this, a glass gob or optical glass having a larger size can be made. Here, the glass gob refers to agglomerated glass that has been directly molded from glass melt.

Note that in the present embodiment, a case where a shape of the concave surface 1020 of the first surface S1 when viewed from the top is a circular shape has been described, but this is not restrictive. For example, the shape of the concave surface 1020 of the first surface S1 when viewed from the top may be an ellipsoidal shape, or may be a polygon such as a rectangular shape. It is assumed that a "radius" in a case where the shape is not a perfect circle means a shortest diameter from the center of gravity.

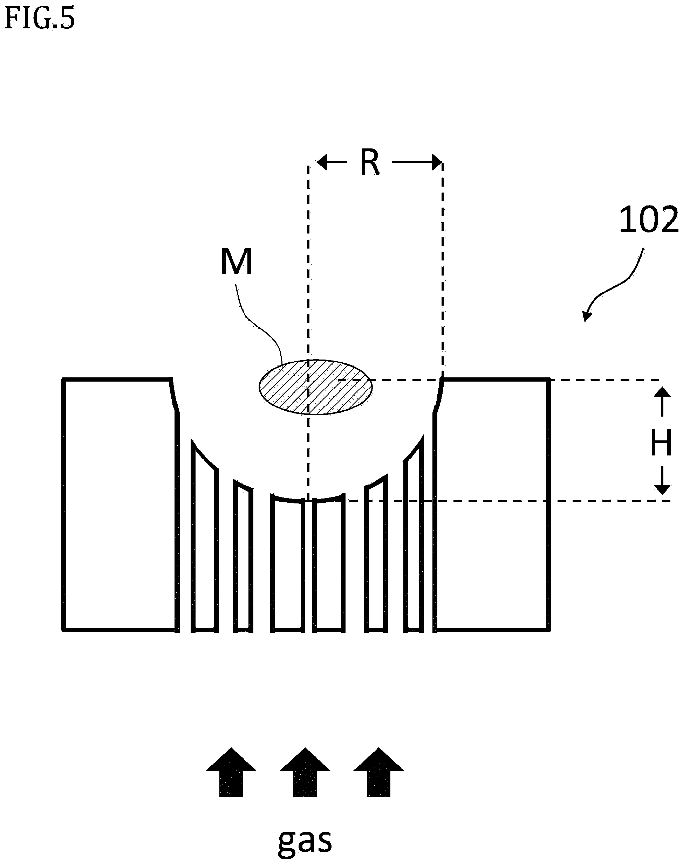

Fig. 5 is a schematic diagram (a sectional view) for explaining a shape of the concave surface 1020 of the holding member 102 according to the present embodiment.

When viewed in a cross section of the concave surface 1020, it is preferable that a maximum depth H of the concave surface 1020 be 4 to 10 mm. The maximum depth H described here of the concave surface 1020 refers to a distance from an opening of the concave surface 1020 to a deepest portion of the concave surface 1020. It is more preferable that a lower limit of the maximum depth H of the concave surface 1020 be 5 mm, and it is further preferable that the lower limit be 5.5 mm. It is more preferable that an upper limit of the maximum depth H of the concave surface 1020 be 6.5 mm, and it is further preferable that the upper limit be 6 mm. The maximum depth H of the concave surface 1020 falls under the range described above, and therefore the sample M can be more stably levitated, and as a result of this, a glass gob having a larger size can be made.

Furthermore, a shape of the concave surface 1020 when viewed in a cross section is not particularly limited, but from a viewpoint of more stably levitating the sample M, it is preferable that the shape be a semicircle or a semiellipsoid.

The holding member 102 is formed by using a non-porous material such as metal. The material of the holding member 102 is not particularly limited, but it is preferable that at least part of the entirety of the member include at least one kind selected from the group consisting of stainless steel (SUS), silicon carbide (SiC), alumina ($Al_2O_3$), zirconia ($ZrO_2$), duralumin, copper (Cu), and carbon (C). These materials have high thermal shock resistance or wear resistance even at high temperature, and therefore even at high temperature at which laser-beam heating is performed, gas can be blown onto the sample M with higher precision, and the sample M can be stably levitated.

<First Configuration Example of Injection Port 1024>

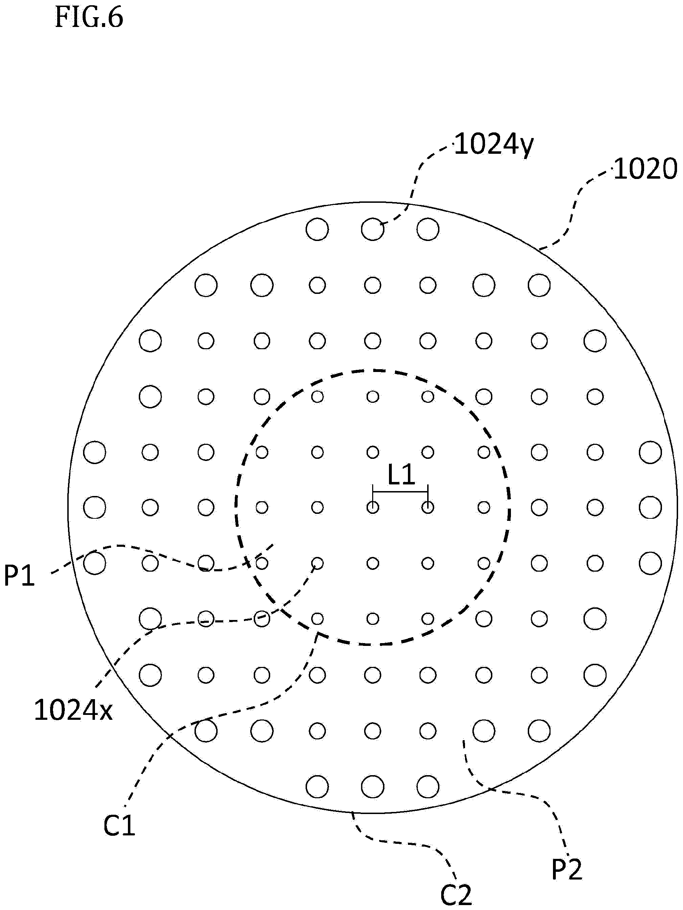

Fig. 6 is a schematic diagram (a top view) (no. 1) for explaining a relationship between the concave surface 1020 and the injection port 1024 according to the present embodiment. Description is provided under the assumption that the injection port 1024 provided in the first region P1 is an injection port 1024x (a first injection port), and the injection port 1024 provided in the second region P2 is an injection port 1024y (a second injection port) that is different from 1024x. It is assumed that an area of the injection port 1024x per unit area of the first region P1 is W1, and an area of the injection port 1024y per unit area of the second region P2 is W2. Note that an area of the injection port 1024 means an area of a space portion that is surrounded by a member of the concave surface 1020 including the injection port 1024, and serves as an opening.

It is assumed that a method for obtaining the area W1 of the injection port 1024x per unit area of the first region P1 is as follows. The area of the first region P1 refers to an area of the first region P1 when the concave surface 1020 is viewed from the top, as illustrated in Fig. 4. Furthermore, an area of the injection ports 1024x included in the first region P1 refers to the total of cross-sectional areas of the injection ports 1024x included in the first region P1 in a cross section (Plane A-A' in Fig. 3) in a plane that is orthogonal to the gravity direction of the holding member 102. For example, in the case of Fig. 3, the area is the total of cross-sectional areas of three injection ports 1024, the injection ports 1024a and b. Accordingly, W1 is expressed by Mathematical Formula (1) described below.

$$\text{Area W1 of injection port 1024x per unit area of first}$$
$$\text{region P1 = total of cross-sectional areas of injection}$$
$$\text{ports 1024x included in first region P1/area of first}$$
$$\text{region P1 when viewed from top...(1)}$$

Furthermore, a method for obtaining the area W2 of the injection port 1024y per unit area of the second region P2 is similar to the method of W1. The area of the second region P2 refers to an area of the second region P2 when the concave surface 1020 is viewed from the top, as illustrated in Fig. 4. Furthermore, an area of the injection ports 1024y included in the second region P2 refers to the total of cross-sectional areas of the injection ports 1024y included in the second region P2 in a cross section (Plane A-A' in Fig. 3) in a plane that is orthogonal to the gravity direction of the holding member 102. For example, in the case of Fig. 3, the area is the total of cross-sectional areas of four injection ports 1024, the injection ports 1024c and d. Accordingly, W2 is expressed by Mathematical Formula (2) described below.

$$\text{Area W2 of injection port 1024y per unit area of second}$$
$$\text{region P2 = total of areas of injection ports 1024y}$$
$$\text{included in second region P2/area of second region P2 when}$$
$$\text{viewed from top...(2)}$$

Moreover, it is preferable that Cross Section A-A' be a cross section that is located in a lowest position when the concave surface 1020 is viewed from the side.

Furthermore, an area of the injection port 1024x or 1024y may be as follows. The area of the injection port 1024x or 1024y may be an area of the injection port 1024x or 1024y when the concave surface is viewed from the top.

The area W1 of the injection port 1024x per unit area of the first region P1 in the example illustrated in Fig. 6 is smaller than the area W2 of the injection port 1024y per unit area of the second region P2. Stated another way,

$$W1 < W2...(3)$$

is satisfied.

Furthermore, a ratio (W1/W2) of the area W1 of the injection port 1024x per unit area of the first region P1 to the area W2 of the injection port 1024y per unit area of the second region P2 is preferably 0.05 to 0.7. Furthermore, it is more preferable that a lower limit value of W1/W2 be 0.1, and it is more preferable that an upper limit value be 0.4.

In the present example, the injection ports 1024 included in the concave surface 1020 is configured as described above, and therefore a flow rate of gas per unit time from the injection ports 1024y provided in the second region P2 is higher than a flow rate of gas per unit time from the injection ports 1024x provided in the first region P1. This enables the sample M to be kept stably levitated near a target position of irradiation with the laser beam L (stable levitation).

Conventionally, for example, in the case of a method for manufacturing optical glass by using a container such as a crucible (this is also referred to as a container method or the like in some cases), it has been requested that glass forming capability be improved by containing a large amount of network former oxide such as $SiO_2$, $B_2O_3$, $P_2O_5$, or $GeO_2$. Therefore, in the case of glass composition in which a large amount of material that is not the network former oxide is contained, and a small amount of the network former oxide described above is contained, there is a problem in which crystallization (non-uniform nucleation) with a container-melt interface as a starting point occurs, and vitrification is difficult.

Furthermore, in a holding member used in a conventional levitation furnace method, gas is blown from a lower side of a sample. Because of a difficulty in keeping the sample stably levitated above the holding member (stable levitation), or the like, precise laser-beam irradiation heating is difficult, and there is a problem in which a large-sized glass gob fails to be made.

With respect to such problems, by using the holding member 102 according to the present embodiment, conditions of blowing gas onto the sample M can be controlled with high precision. As a result of this, a stable levitation state that could not be achieved conventionally can be maintained (high levitation stability), and a glass gob having a larger size can be made. Stated another way, high stable levitation capability contributes to precise irradiation heating using a laser beam, an increase in size of obtained optical glass (glass gob), uniformization of a component composition, or the like.

In some cases, a glass gob is used as a material of an optical lens of various optical devices, such as an objective for microscopes or a camera lens, and it is desired that a large-sized glass gob can be stably made. By using the holding member according to the present embodiment, such a request can be met.

Furthermore, it is assumed that the number of injection ports 1024x per unit area of the first region P1 is T1, and the number of injection ports 1024y per unit area of the second region P2 is T2.

A plurality of injection ports 1024 included in the concave surface 1020 illustrated in Fig. 6 is disposed at roughly equal intervals. Stated another way, a distance L1 from a center of each of the injection ports 1024 to a center of another injection port 1024 that is adjacent to the injection port 1024 is roughly equal. In other words, the number T1 of injection ports 1024x per unit area of the first region P1 in the example illustrated in Fig. 6 is equal to the number T2 of injection ports 1024y per unit area of the second region P2.

In order to stably levitate the sample M, it is preferable that a radius of the injection port 1024x be 0.05 mm to 0.2 mm. Furthermore, it is more preferable that a lower limit value of the radius of 1024x be 0.1 mm, and it is more preferable that an upper limit value be 0.15 mm. Furthermore, it is preferable that a radius of the injection port 1024y be 0.2 mm to 0.5 mm. Furthermore, it is more preferable that a lower limit value of the radius of 1024y be 0.3 mm, and more preferably, 0.4 mm.

Note that the number of injection ports 1024 in the present example is not limited to this. It is sufficient if the area W1 of the injection port 1024x per unit area of the first region P1 is smaller than the area W2 of the injection port 1024y per unit area of the second region P2, and for example, the number T1 of injection ports 1024x per unit area of the first region P1 may be greater than the number T2 of injection ports 1024 per unit area of the second region P2.

Furthermore, a single injection port 1024x that is larger than a single injection port 1024y of the second region P2 may be present in the first region P1. Similarly, a single injection port 1024y that is smaller than a single injection port 1024x of the first region P1 may be present in the second region P2.

<Second Configuration Example of Injection Port 1024>

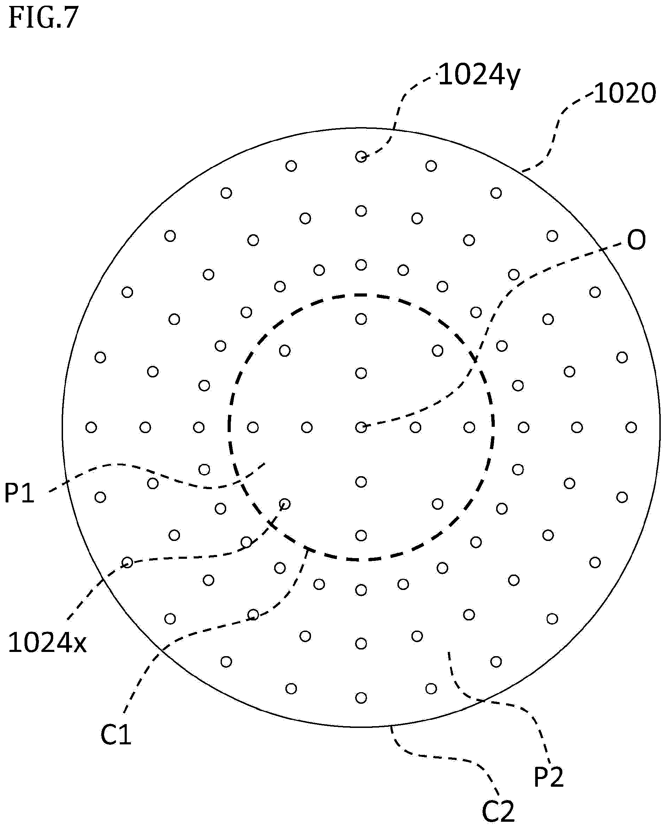

Fig. 7 is a schematic diagram (a top view) (no. 2) for explaining a relationship between the concave surface 1020 and the injection port 1024 according to the present embodiment. The number T1 of injection ports 1024x per unit area of the first region P1 in the example illustrated in Fig. 7 is smaller than the number T2 of injection ports 1024y per unit area of the second region P2. Stated another way,

$$T1 < T2 ... (4)$$

is satisfied.

Furthermore, a ratio (T1/T2) of the number T1 of injection ports 1024x per unit area of the first region P1 to the number T2 of injection ports 1024y per unit area of the second region P2 is preferably 0.05 to 0.5. It is more preferable that a lower limit value of T1/T2 be 0.1, and it is more preferable that an upper limit value be 0.3.

For example, in a state where the holding member 102 is viewed in a cross section, in the first region P1 including the center point O of the concave surface 1020, through-holes can be disposed at long intervals, and at a position closer to an end of the concave surface 1020, the through-holes can be disposed at shorter intervals. By employing such a configuration, the relationship expressed by Mathematical Formula (4) can be satisfied.

In the present example, a certain number of injection ports 1024 that satisfies Mathematical Formula (4) are provided on the concave surface 1020, and the injection ports 1024 are formed in such a way that the area W1 of the injection port 1024x per unit area of the first region P1 is smaller than the area W2 of the injection port 1024y per unit area of the second region P2. Stated another way, in the present example, similarly to the example illustrated in Fig. 6, a flow rate of gas per unit time from the injection ports 1024 provided in the second region P2 is higher than a flow rate of gas per unit time from the injection ports 1024 provided in the first region P1. Accordingly, the sample M can be kept stably levitated near a target position of irradiation with the laser beam L.

In the sample M that has entered into a melt state due to laser heating, deformation or vibration easily occurs when the sample M has received pressure of gas, in accordance with a reduction in viscosity or surface tension that has been caused by a rise in temperature. Moreover, as the volume or gross weight of the sample M increases, the sample M more easily receives an influence of empty weight or a gas flow, and therefore a degree of deformation or vibration of melt becomes more outstanding. Accordingly, it is difficult to stably float up a large-sized sample M. However, by employing a configuration according to the present embodiment, a flow rate of gas per unit time in the second region is higher than a flow rate of gas per unit time in the first region, and therefore even the large-sized sample M can be kept stably levitated.

Note that an area of a single injection port 1024x of the first region P1 in the example illustrated in Fig. 7 is equal to an area of a single injection port 1024y of the second region P2. However, an area of a single injection port 1024 in the present example is not limited to this.

<Third Configuration Example of Injection Port 1024>

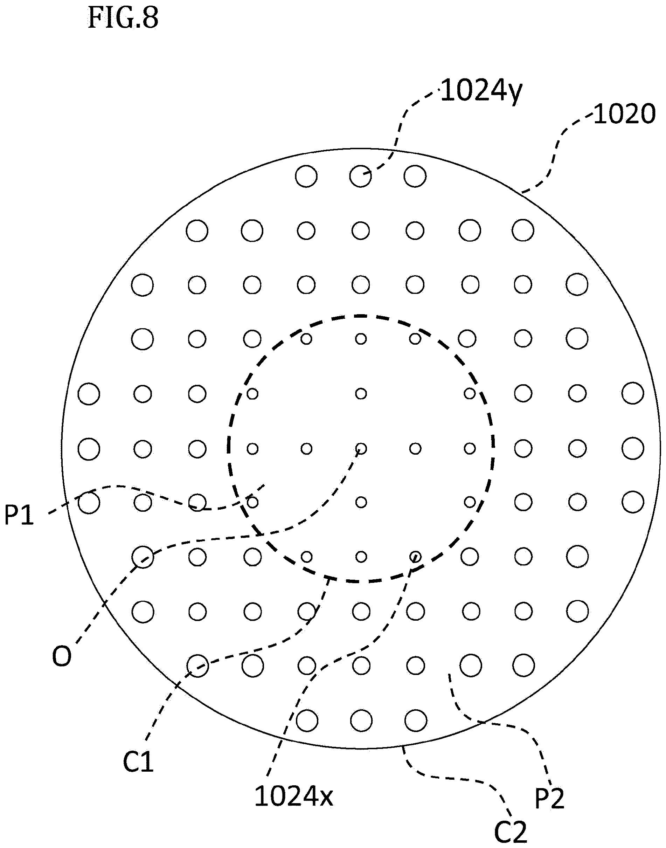

Fig. 8 is a schematic diagram (a top view) (no. 3) for explaining a relationship between the concave surface 1020 and the injection port 1024 according to the present embodiment. The area W1 of the injection port 1024x per unit area of the first region P1 in the example illustrated in Fig. 8 is smaller than the area W2 of the injection port 1024y per unit area of the second region P2. Furthermore, the number T1 of injection ports 1024x per unit area of the first region P1 in the example illustrated in Fig. 8 is smaller than the number T2 of injection ports 1024y per unit area of the second region P2.

Stated another way, in the example illustrated in Fig. 8, Mathematical Formula (3) and Mathematical Formula (4) that have been described above are satisfied.

In the present example, similarly to the other example described above, a flow rate of gas per unit time from the injection ports 1024 provided in the second region P2 is higher than a flow rate of gas per unit time from the injection ports 1024 provided in the first region P1. Stated another way, the sample M can be kept stably levitated near a target position of irradiation with the laser beam L.

Note that the disposition of the injection ports 1024 is not limited to the positions described above and illustrated in Figs. 6 to 8. In order to stably levitate the sample M, it is preferable that the disposition of the injection ports 1024 when the concave surface 1020 is viewed from the top have symmetry, such as point symmetry or line symmetry, as the center point O (or the center of gravity) of the concave surface 1020 as a center in each of the first region P1 and the second region P2.

<Second General Example of Concave Surface 1020>

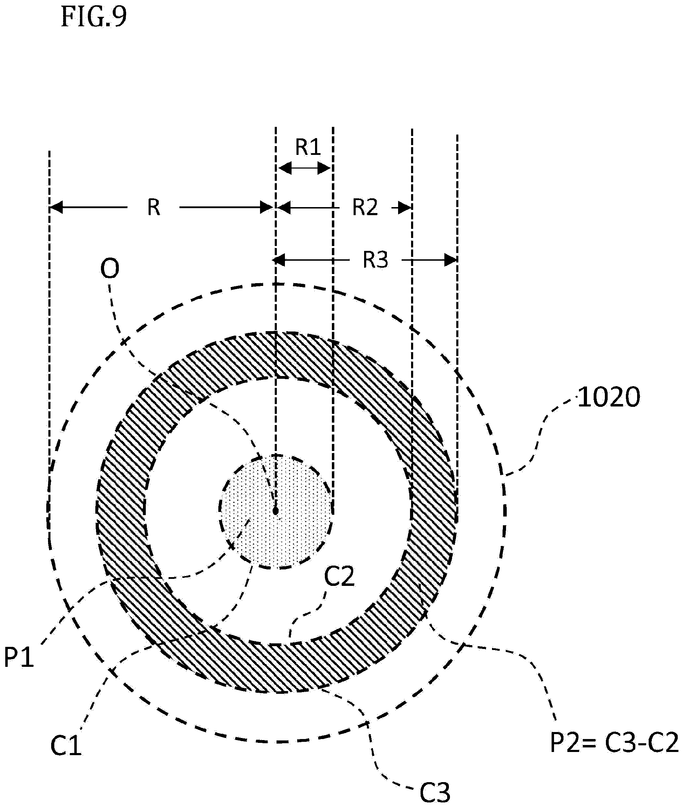

Fig. 9 is a partial schematic diagram (a top view) (no. 2) of the concave surface 1020 of the holding member 102 according to the present embodiment. In the partial schematic diagram illustrated in Fig. 4, the first region P1 and the second region P2 are adjacent to each other. In the example illustrated in the present drawing, the first region P1 and the second region P2 are not adjacent to each other.

When viewed from the top, the concave surface 1020 concentrically includes the region of the first circle C1, the region of the second circle C2 having the radius R2 that is larger than or equal to the radius R1 of the first circle C1, and a region of a third circle C3 having a radius R3 that is larger than the radius R2 of the second circle C2, the first region P1 is the region of the first circle C1, and the second region P2 is an annular region obtained by excluding the region of the second circle C2 from the region of the third circle C3.

In the present example, in the first region P1, it is preferable that the radius R1 from the center point O be 3 mm or less, when the concave surface 1020 is viewed from the top. Furthermore, it is preferable that the radius R1 be 1 to 3 mm, it is more preferable that a lower limit value be 1.5 mm, and it is more preferable that an upper limit value be 2.5 mm.

In the second region P2, it is preferable that the radius R2 that corresponds to a radius of an inner circumference of the annular region be 3 to 5 mm, when the concave surface 1020 is viewed from the top. It is more preferable that a lower limit value of the radius R2 be 3.5 mm, and it is more preferable that an upper limit value of the radius R2 be 4.5 mm. It is preferable that the radius R3 that corresponds to a radius of an outer circumference of the annular region be 5 to 9 mm. It is more preferable that a lower limit value of the radius R3 be 5.5 mm, and it is further preferable that an upper limit value of the radius R3 be 8 mm. Moreover, it is preferable that the radius R2 be one to three times as large as the radius R1, and it is preferable that the radius R3 be 3.5 to 6 times as large as R1.

Furthermore, the concave surface 1020 is a circular shape having the radius R, when viewed from the top.

It is preferable that the first region P1 be a circular region for which the radius R1 from the center point O is 0.2R (0.2 times as large as the radius R) or less, in comparison with the radius R of the concave surface 1020, when the concave surface 1020 is viewed from the top.

In the second region P2, when the concave surface 1020 is viewed from the top, it is preferable that the radius R2 from the center point O be 0.4R (0.4 times as large as the radius R) or more, in comparison with the radius R of the concave surface 1020, and it is more preferable that the radius R2 be 0.5R (0.5 times as large as the radius R) or more. Furthermore, it is preferable that the radius R3 from the center point O be 0.9R (0.9 times as large as the radius R) or less, and it is further preferable that the radius R3 be 0.8R (0.8 times as large as the radius R) or less.

As described in the present example, in a case where the first region P1 and the second region P2 are not adjacent to each other, similarly, the concave surface 1020 can be configured in such a way that a flow rate of gas per unit time from the injection ports 1024 provided in the second region P2 is higher than a flow rate of gas per unit time from the injection ports 1024 provided in the first region P1. This enables high levitation stability to be maintained.

The holding member 102 in which through-holes through which gas passes have been provided to extend in an upward/downward direction inside the member has been described above as an example. However, a holding member according to the present embodiment is not limited to such an aspect, and another aspect may be employed.

<First Configuration Example of Holding Member (Holding Member 111) according to Second Embodiment>

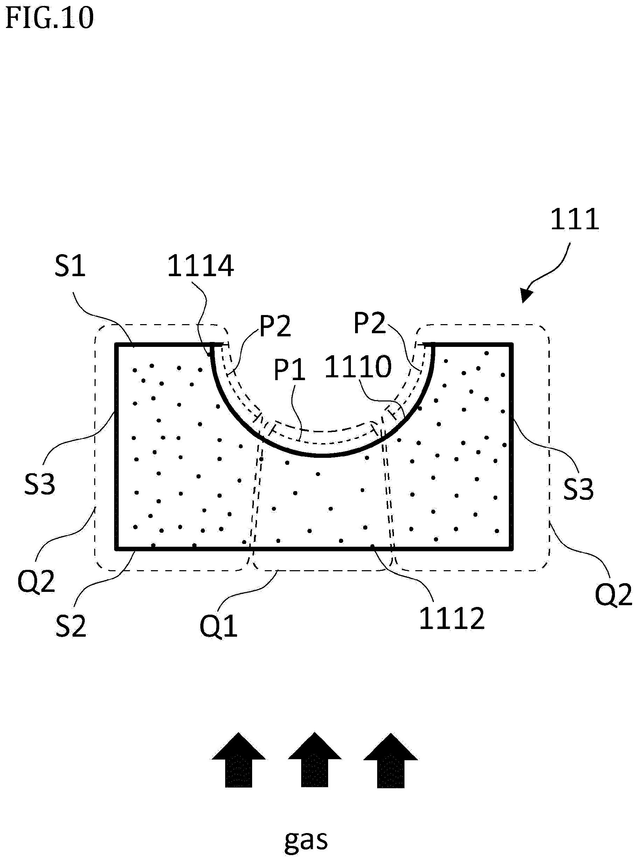

Fig. 10 is a schematic diagram (a sectional view) (no. 1) of a holding member 111 according to a second embodiment. A difference from the first embodiment is described below. At least part of the holding member 111 according to the second embodiment is porous.

A porous material is included, and therefore gas supplied to an introduction port 1112 can be blown onto the sample M from an injection port 1114 via an internal hole structure. As described above, the through-hole described above may be a hole made of a porous material. Stated another way, it can be said that a hole that is a porous body of the holding member 111 is one aspect of the through-hole described above. Fig. 10 illustrates a case where all of the members that constitute the holding member 111 are porous. Specific examples of a porous material include stainless steel (SUS), silicon carbide (SiC), alumina ($Al_2O_3$), zirconia ($ZrO_2$), carbon (C), and the like.

If a pore diameter of the porous body that constitutes the holding member 111 is too small, pressure loss increases, and gas fails to pass sufficiently. Furthermore, if the pore diameter is too large, a surface shape including a concave surface 1110 becomes coarse. Accordingly, it is preferable that the pore diameter of the porous body that constitutes the holding member 111 be 1 to 100 um. It is more preferable that a lower limit of the pore diameter be 5 $\mu$m, and it is further preferable that the lower limit be 9 um. It is more preferable that an upper limit of the pore diameter be 50 $\mu$m, and it is further preferable that the upper limit be 20 $\mu$m.

The pore diameter of the porous body that constitutes the holding member 111 falls under the range described above, and therefore gas can be made to appropriately pass, and an influence on the surface shape of the concave surface 1110 can be reduced.

The density of the internal disposition of a pore structure of the holding member 111 is made non-uniform, and therefore gas can be blown in such a way that the relationship expressed by Mathematical Formula (3) or Mathematical Formula (4) is satisfied. Here, it is assumed that a portion of the holding member 111 that includes pores from which gas is supplied to the injection port 1114 included in the first region P1 is a portion Q1, and a portion of the holding member 111 that includes pores from which gas is supplied to the injection port 1114 included in the second region P2 is Q2. For example, it is assumed that a porosity of the portion Q1 of the holding member 111 that corresponds to the first region P1 including a center point O of the concave surface 1110 of the first surface S1 is V1, and a porosity of the portion Q2 of the holding member 111 that corresponds to the second region P2 that is located outside the first region P1 is V2. Note that the porosity described here is a ratio of the volume of a space to the total volume of a substance.

In the present embodiment, the porosity V1 of the portion Q1 of the holding member 111 that corresponds to the first region P1 including the center point O of the concave surface 1110 of the first surface S1 is lower than the porosity V2 of the portion Q2 of the holding member 111 that corresponds to the second region P2 that is located outside the first region P1. Stated another way,

$$V1 < V2...(5)$$

is satisfied.

As a result of a configuration in which the porosity V1 of the portion Q1 is lower than the porosity V2 of the portion Q2, the area W1 of the injection port 1114 per unit area of the first region P1 is smaller than the area W2 of the injection port 1114 per unit area of the second region P2. Stated another way, Mathematical Formula (3) described above is satisfied, and a flow rate of gas per unit time from the injection ports 1024y provided in the second region P2 is higher than a flow rate of gas per unit time from the injection ports 1024x provided in the first region P1. This enables the sample M to be kept stably levitated near a target position of irradiation with the laser beam L (stable levitation). Note that the number T1 of injection ports 1114 per unit area of the first region P1 can be made smaller than the number T2 of injection ports 1114 per unit area of the second region P2.

As a result of forming the holding member 111 by using a porous material, at least one of a plurality of injection ports 1114 included on the concave surface 1110 is connected to a plurality of introduction ports 1112. The portion Q1 of the holding member 111 corresponds to a plurality of injection ports 1114 provided in the first region P1, and includes poles or the introduction ports 1112 that are connected to the injection port 1114. Similarly, the portion Q2 of the holding member 111 corresponds to a plurality of injection ports 1114 provided in the second region P2, and includes poles or the introduction ports 1112 that are connected to the injection port 1114.

In the present embodiment, the introduction port 1112 is not always provided on the second surface S2. For example, gas may be introduced from a side surface of the holding member 111. In other words, a gas introduction surface including the introduction ports 1112 may be at least either a side surface S3 of the holding member 111 or the second surface S2 that is an opposite side of the concave surface 1110.

In addition, the holding member 111 according to the present embodiment can be formed by combining a porous body that is located in the portion Q1 and a porous body that is located in the portion Q2 that is different from the portion Q1. As another example, the holding member 111 is constituted by a single porous body, and the porous body can be formed in such a way that the portion Q1 and the portion Q2 are different in porosity from each other.

By employing the holding member 111 according to the present embodiment, a flow rate of gas per unit time from the injection ports 1114 provided in the second region P2 is higher than a flow rate of gas per unit time from the injection ports 1114 provided in the first region P1. This enables the sample M to be kept stably levitated near a target position of irradiation with the laser beam L (stable levitation).

<Second Configuration Example of Holding Member (Holding Member 112) according to Second Embodiment>

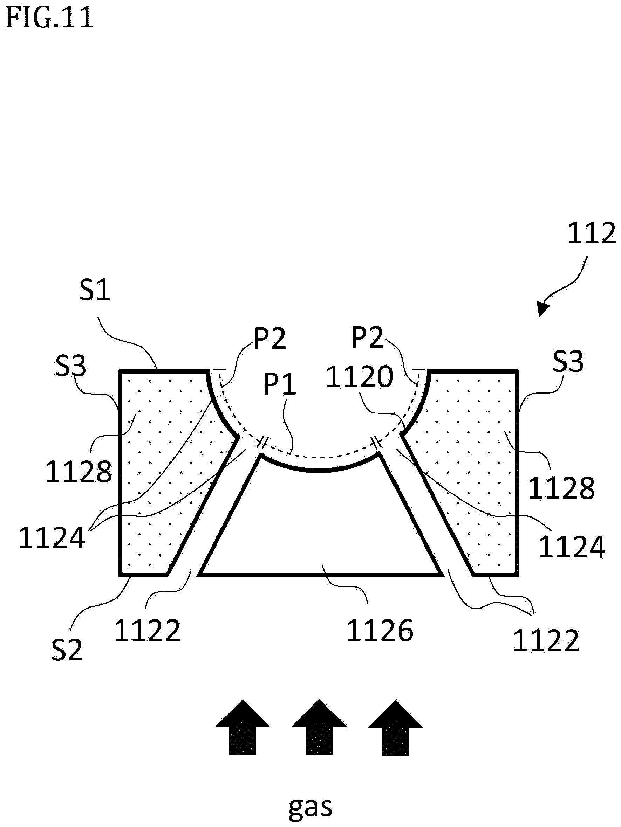

Fig. 11 is a schematic diagram (a sectional view) (no. 2) of a holding member 112 according to the second embodiment. The holding member 112 illustrated in the present diagram includes a member made of a porous material, and a member made of a non-porous material.

The holding member 112 includes introduction ports 1122 and injection ports 1124, and is constituted by a non-porous portion 1126 and a porous portion 1128, and a through-hole is disposed between the non-porous portion 1126 and the porous portion 1128. Stated another way, a concave surface 1120 of the first surface S1 includes both a porous region and a non-porous region, and this enables a flow rate of gas to be controlled. As the non-porous portion 1126, a member that is not porous is used, and for example, stainless steel (SUS), silicon carbide (SiC), alumina, zirconia ($ZrO_2$), duralumin, copper (Cu), carbon (C), various other metals, and the like can be used.

The non-porous portion 1126 corresponds to the first region P1 including a center portion of the concave surface 1120, and the porous portion 1128 corresponds to the second region P2 that is located outside the first region P1. Furthermore, the through-pole between the non-porous portion 1126 and the porous portion 1128 is treated as being located in the second region P2. In the holding member 112, a flow rate of gas per unit time from the injection ports 1124 provided in the second region P2 is higher than a flow rate of gas per unit time from the injection ports 1124 provided in the first region P1.

Note that in the present configuration example, similarly, the introduction ports 1122 are not always provided in the second surface S2, and gas may be introduced from the side surface S3 of the holding member 112.

<Third Configuration Example of Holding Member (Holding Member 113) according to Second Embodiment>

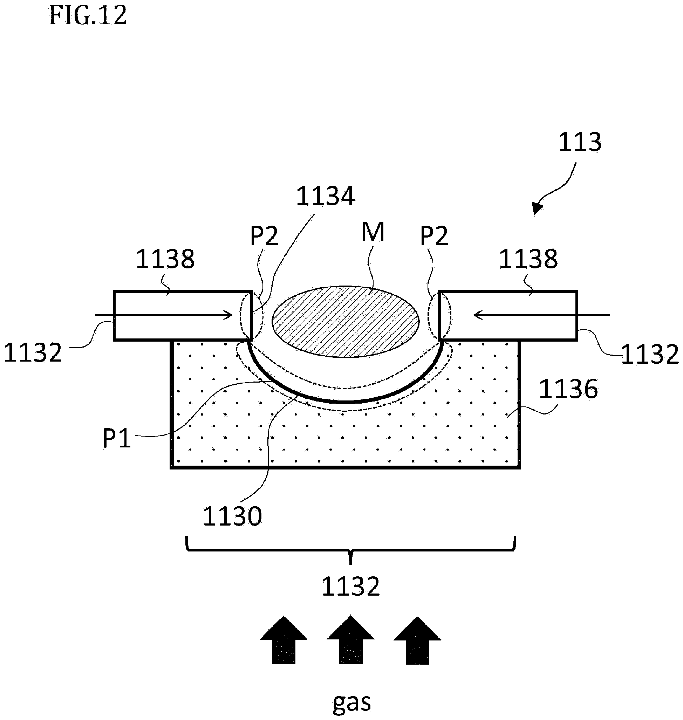

Fig. 12 is a schematic diagram (a sectional view) (no. 3) of a holding member 113 according to the second embodiment. In the holding member 113 illustrated in the present diagram, at least part of an injection port 1134 included in the second region P2 injects gas in a roughly horizontal direction that is roughly orthogonal to the gravity direction.

The holding member 113 includes a member 1136 and a member 1138. A material of the member 1136 is not particularly limited. The member 1136 may be formed by using a porous material including the injection ports 1134, may be formed by using a non-porous material including the injection ports 1134, or may be formed by using a non-porous material that does not include the injection ports 1134. The member 1136 is provided in a position that corresponds to the first region P1 including a center point O of a concave surface 1130.

The member 1138 includes the injection port 1134, and injects, from the injection port 1134, gas that has been introduced from the introduction ports 1132. The member 1138 injects gas in the roughly horizontal direction. The member 1138 is provided in a position that corresponds to the second region P2 outside the first region P1. Note that the introduction port 1132 from which gas is introduced to the injection port 1134 may be located on a side surface of the holding member 113. Alternatively, the introduction port 1132 may be located in a lower portion of the holding member 113, and gas may be introduced to the injection port 1134 via a curved hollow member.

In the holding member 113, a flow rate of gas per unit time of the second region P2 is higher than a flow rate of gas per unit time of the first region P1.

By employing the present configuration, gas is blown onto the sample M from the roughly horizontal direction, and the sample M can be levitated more stably.

<Fourth Configuration Example of Holding Member (Holding Member 114) according to Second Embodiment>

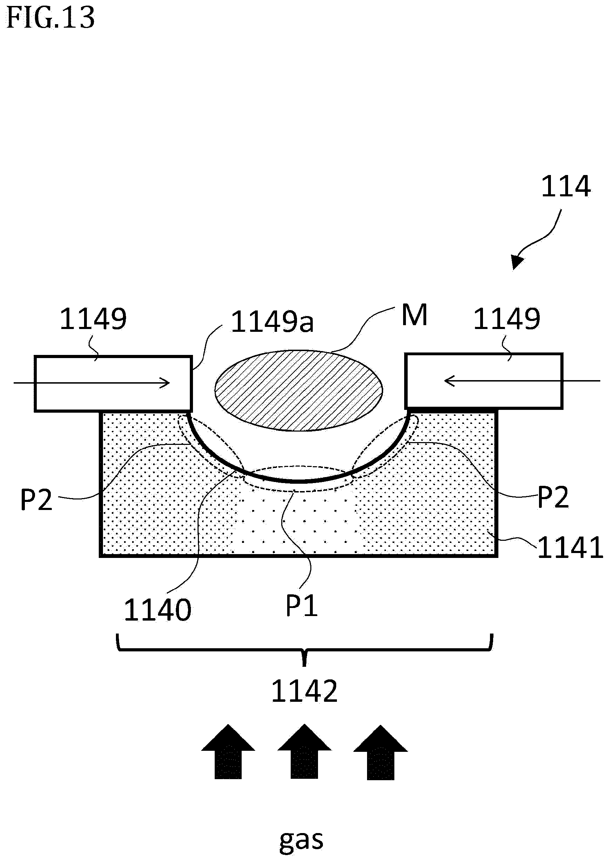

Fig. 13 is a schematic diagram (no. 4) of a holding member 114 according to the second embodiment. The holding member 114 illustrated in the present diagram includes a member 1141 and a member 1149.

The member 1141 includes a concave surface 1140, and is a member that includes the first region P1 and the second region P2 on the concave surface 1140. The member 1141 may be any of the holding members 102, 111, and 112 described above. In the member 1141, the area W1 of the injection port 1134 per unit area of the first region P1 and the area W2 of the injection port 1134 per unit area of the second region P2 satisfy Mathematical Formula (3) described above.

The member 1149 is a member that is located in an upper portion of the concave surface 1140, and includes an injection port 1149a from which gas is injected in the roughly horizontal direction that is roughly orthogonal to the gravity direction. In addition to the member 1141, the injection port 1149a from which gas is injected in the roughly horizontal direction is included, and therefore the sample M can be levitated more stably.

Note that it is preferable that a process of levitating a sample by blowing gas onto the sample, and melting the sample by irradiating the sample with a laser beam in a gas levitation furnace be performed in a chamber in which pressure can be reduced, but this is not illustrated. By blowing gas onto the sample under reduced pressure, gas easily passes through a porous material or a through-hole of a holding member. As a result, even in a case where a flow rate of gas is small, high levitation stability can be obtained, and turbulence can be prevented from occurring. Furthermore, gas may be heated, and this can also prevent turbulence. Moreover, defocus of the laser beam L to be applied or scanning may be performed. By doing this, a sample can be uniformly heated, and levitation stability can be improved.

<First Configuration Example of Holding Member (Holding Member 121) according to Third Embodiment>

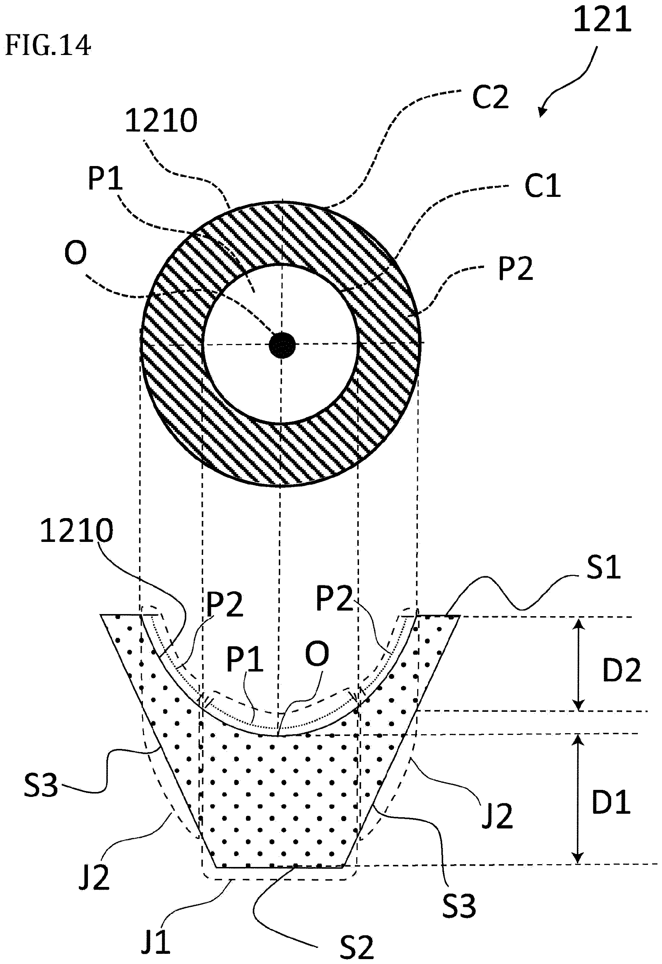

Fig. 14 is a schematic diagram (a top view and a sectional view) (no. 1) of a holding member 121 according to a third embodiment. An upper portion in Fig. 14 is the top view of the holding member 121, and a lower portion in Fig. 14 is the sectional view of the holding member 121. A difference from the first embodiment and the second embodiment is described below.

The holding member 121 according to the third embodiment includes the second surface S2 that serves as a gas introduction surface, and has a protruding shape, includes a portion J1 that is surrounded by a surface including a straight line that is drawn from the first circle C1 to the second surface S2 (or the side surface S3) in the gravity direction (in a perpendicular direction), and a portion J2 that is surrounded by a surface including a straight line that is drawn from the second circle C2 to the second surface S2 (or the side surface S3) in the gravity direction, and includes a portion in which a thickness of the portion J1, which is a length of a straight line that is drawn from a point in the first circle C1 to the second surface S2 (or the side surface S3) in the gravity direction, is greater than a thickness of the portion J2, which is a length of a straight line that is drawn from a point in the second circle C2 to the second surface S2 (or the side surface S3) in the gravity direction. Note that the portion J2 does not include the portion J1, as described in detail later. As an example, the second surface S2 has a tapered shape in which a portion near a center portion is roughly horizontal, and a circumference gradually becomes thinner in a downward direction toward the center portion. In Fig. 14, it is assumed that a surface that forms the tapered shape that gradually becomes thinner toward the center portion is the side surface S3. In other words, it can be said that the second surface S2 has a roughly truncated cone shape that gradually becomes wider in an upward direction.

The holding member 121 in the present example is constituted by a porous body. By changing a thickness of the holding member 121, levitation stability of the sample M can be improved.

Here, in the holding member 121, it is assumed that a portion that is surrounded by a surface including a straight line that is drawn from the first circle C1 to the second surface S2 (or the side surface S3) in the perpendicular direction is the portion J1, and a portion excluding the portion J1 of a portion that is surrounded by a surface including a straight line that is drawn from the second circle C2 to the second surface S2 (or the side surface S3) in the perpendicular direction is the portion J2. The portion J1 is a portion of the holding member 121 that corresponds to the first region P1 including a center point O of a concave surface 1210 of the first surface S1, and the portion J2 is a portion of the holding member 121 that corresponds to the second region P2 that is located outside the first region P1.

Note that the perpendicular direction in the present example is a vertical direction in the case of being stationarily placed on a horizontal surface that is orthogonal to the gravity direction with the concave surface 1210 of the holding member 121 facing upward. For example, in a case where the second surface S2 is a roughly flat surface, the perpendicular direction is a direction that is perpendicular to the second surface S2.

For example, it is assumed that an average thickness of the portion J1 is K1, and an average thickness of the portion J2 is K2. Note that the average thickness described here is a value obtained by measuring a thickness at plural predetermined points, when viewed in a cross section, and calculating an average value of the thicknesses. In a case where it is assumed that a predetermined point on the concave surface 1210 is a start point, and a point at which a straight line that extends from the point in the perpendicular direction intersects the second surface S2 (or the side surface S3) is an end point, the thickness indicates a distance from the start point to the end point.

In the present embodiment, the average thickness K1 of the portion J1 of the holding member 121, when viewed in a cross section, is greater than the average thickness K2 of the portion J2 of the holding member 121. Stated another

way,

$$K1 > K2...(6).$$

In other words, in the present embodiment, the average thickness K1 of the holding member 121 between the first region P1 and the second surface S2, which is a gas introduction surface, is greater than the average thickness K2 of the holding member 121 between the second region P2 and the second surface S2 (or the side surface S3).

Furthermore, a ratio (K2/K1) of the average thickness K2 of the portion J2 to the average thickness K1 of the portion J1 is preferably 0.5 to 0.95. It is more preferable that a lower limit value of K2/K1 be 0.6, and it is more preferable that an upper limit value be 0.9.

Furthermore, in the present embodiment, it is assumed that a thickness of the holding member 121 at the center point O, when viewed in a cross section, is D1, and a thickness of the holding member 121 at an arbitrary point on the second region P2 is D2. D2 is configured in such a way that a shortest D2 is shorter than D1. Furthermore, a configuration in which a longest D1 is longer than D2 is employed.

By employing the present configuration, a difference in a length of a route through which gas passes is generated between the portion J1 relating to the first region P1 and the portion J2 relating to the second region P2, and a route relating to the portion J1 becomes longer than a route relating to the portion J2. As a result of this, a flow rate of gas that passes through the portion J2 is higher than a flow rate of gas that passes through the portion J1. Therefore, the sample M can be stably levitated near the center point O, and a glass gob having a larger size can be generated.

Note that the holding member 121 according to the third embodiment can be configured to satisfy Mathematical Formula (3) or Mathematical Formula (4) described above similarly to the holding members according to the first embodiment and the second embodiment.

<Second Configuration Example of Holding Member (Holding Member 122) according to Third Embodiment>

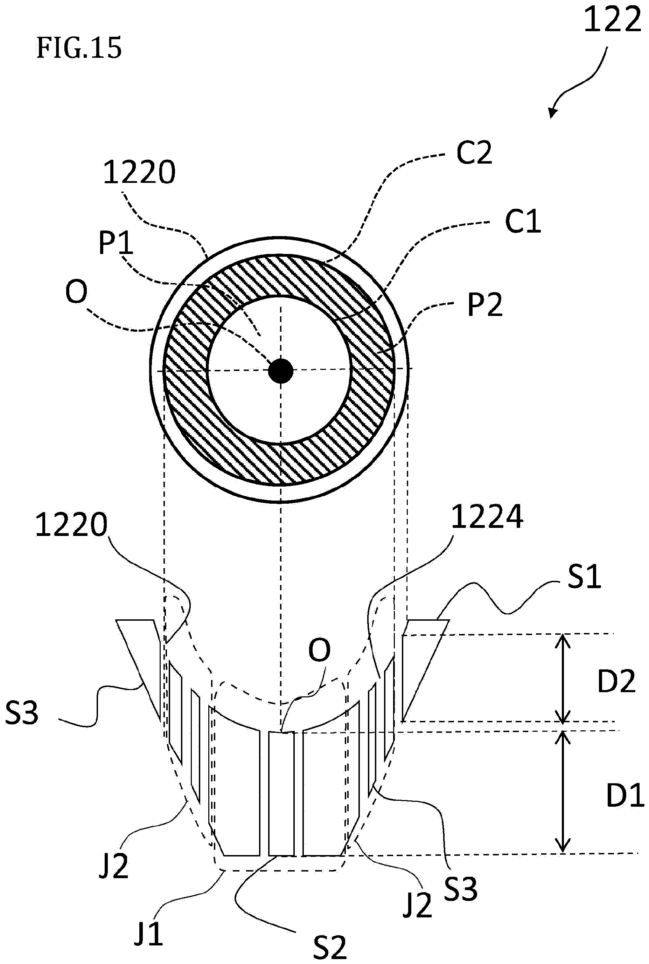

Fig. 15 is a schematic diagram (a top view and a sectional view) (no. 2) of a holding member 122 according to the third embodiment. An upper portion in Fig. 15 is the top view of the holding member 122, and a lower portion in Fig. 15 is the sectional view of the holding member 122. The holding member 122 in the present diagram is constituted by a non-porous body.

In the holding member 122, similarly to the holding member 121, the second surface S2 has a protruding shape. Stated another way, the second surface S2 including the side surface S3 has a roughly truncated cone shape that gradually becomes wider in an upward direction. In the holding member 122, the average thickness K1 of the portion J1 of the holding member 121 that corresponds to the first region P1 including a center point O of a concave surface 1220 of the first surface S1, when viewed in a cross section, is greater than the average thickness of the portion J2 of the holding member 121 that corresponds to the second region P2 that is located outside the first region P1, similarly to the holding member 121.

Furthermore, in a case where it is assumed that a thickness of the holding member 122 at the center point O, when viewed in a cross section, is D1, and a thickness of the holding member 122 at an arbitrary point on the second region P2 is D2, D2 is configured in such a way that a shortest D2 is shorter than D1, similarly to the holding member 121.

In the present configuration, similarly, a flow rate of gas that passes through the portion J2 is higher than a flow rate of gas that passes through the portion J1. Therefore, the sample M can be stably levitated near the center point O, and a glass gob having a larger size can be generated.

Note that the holding member 122 in the present example can be configured to satisfy Mathematical Formula (3) or Mathematical Formula (4) described above, similarly to the holding members according to the first embodiment and the second embodiment.

<Third Configuration Example of Holding Member (Holding Member 123) according to Third Embodiment>

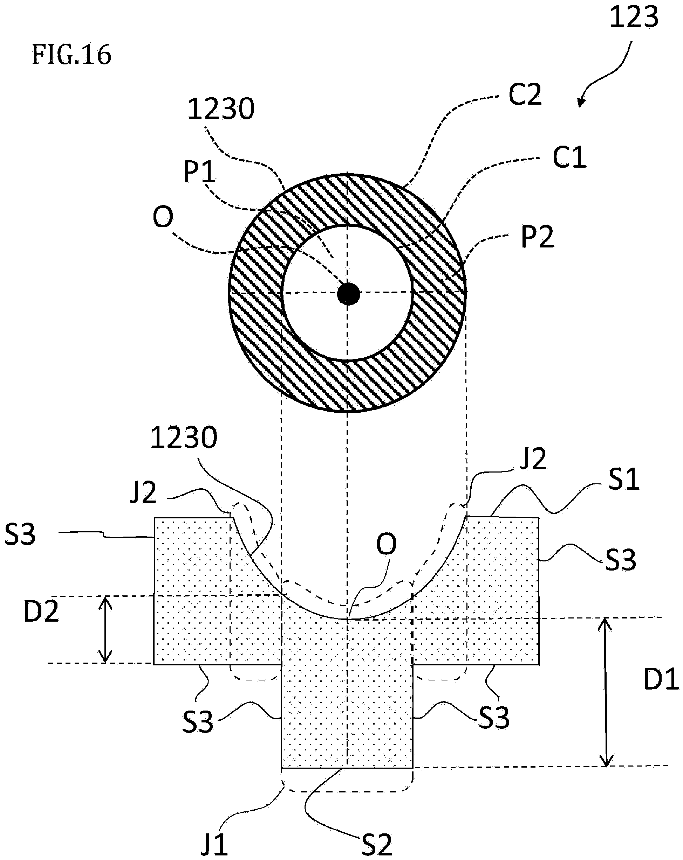

Fig. 16 is a schematic diagram (a top view and a sectional view) (no. 2) of a holding member 123 according to the third embodiment. An upper portion in Fig. 16 is the top view of the holding member 123, and a lower portion in Fig. 16 is the sectional view of the holding member 123. The holding member 123 in the present diagram is constituted by a porous body. Note that the holding member 123 may be constituted by a non-porous body, or may be constituted by both the porous body and the non-porous body.

In the holding member 123, similarly to the holding member 121 and the holding member 122, the second surface S2 has a protruding shape. More specifically, the second surface S2 of the holding member 123 includes a protrusion. A portion near a center portion of the second surface S2 is roughly horizontal. Furthermore, it is assumed that, in the second surface S2, a surface other than the portion near the center portion is the side surface S3.

For example, the protrusion can be formed by forming a portion located just below the first region P1 to be roughly horizontal, and forming the other portion to be recessed. Similarly to the example described above, it is assumed that a portion of the holding member 123 that corresponds to the first region P1 including a center point O of a concave surface 1230 of the first surface S1 is the portion J1, and a portion of the holding member 123 that corresponds to the second region P2 that is located outside the first region P1 is the portion J2. The average thickness K1 of the portion J1, when viewed in a cross section, is greater than an average thickness of the portion J2.

Furthermore, in the holding member 123, in a case where it is assumed that a thickness of the holding member 123 at the center point O, when viewed in a cross section, is D1, and a thickness of the holding member 123 at an arbitrary point on the second region P2 is D2, D2 is configured in such a way that a shortest D2 is shorter than D1, similarly to the holding members 121 and 122.

In the present configuration, similarly, a flow rate of gas that passes through the portion J2 is higher than a flow rate of gas that passes through the portion J1. Therefore, the sample M can be stably levitated near the center point O, and a glass gob having a larger size can be generated. Note that the holding member 123 in the present example can be configured to satisfy Mathematical Formula (3) or Mathematical Formula (4) described above, similarly to the holding members according to the first embodiment and the second embodiment.

<Fourth Configuration Example of Holding Member (Holding Member 124) according to Third Embodiment>

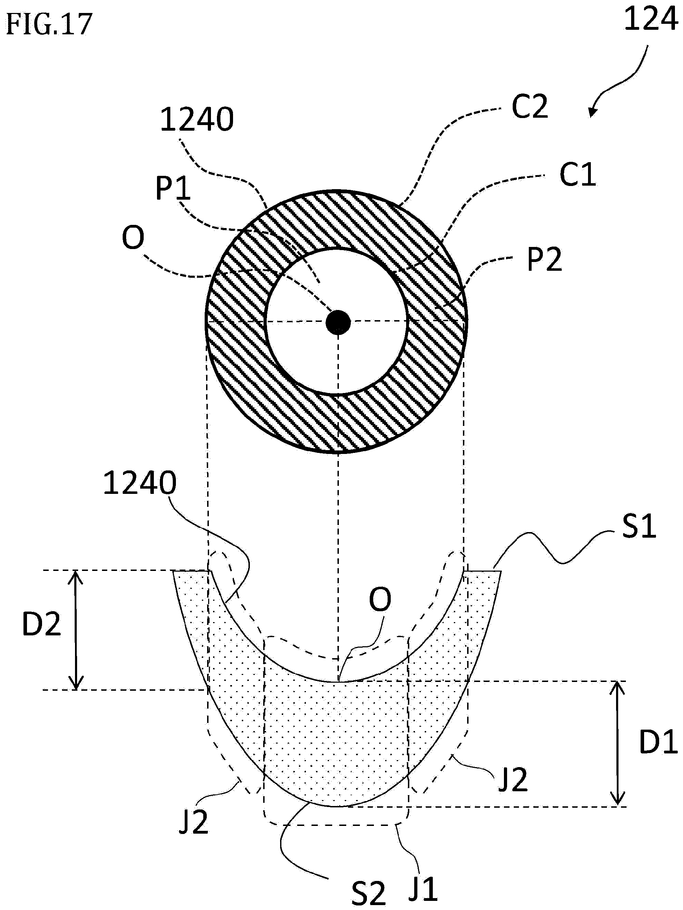

Fig. 17 is a schematic diagram (a top view and a sectional view) (no. 4) of a holding member 124 according to the third embodiment. An upper portion in Fig. 17 is the top view of the holding member 124, and a lower portion in Fig. 17 is the sectional view of the holding member 124. The holding member 124 in the present diagram is constituted by a porous body. Note that the holding member 124 may be constituted by a non-porous body, or may be constituted by both the porous body and the non-porous body.

In the holding member 124, similarly to the holding members 121, 122, and 123, the second surface S2 has a protruding shape. More specifically, the second surface S2 of the holding member 124 has a bowl shape in which a portion where a straight line that extends from a center point O in the perpendicular direction intersects the second surface S2 is the longest. In other words, the holding member 124 draws a rough parabola in which the second surface S2 is downwardly convex, when viewed in a cross section.

In the holding member 124 in the present example, similarly, the average thickness K1 of the portion J1 of the holding member 124, when viewed in a cross section, is greater than the average thickness of the portion J2 of the holding member 123.

Furthermore, in a case where it is assumed that a thickness of the holding member 124 at the center point O, when viewed in a cross section, is D1, and a thickness of the holding member 124 at an arbitrary point on the second region P2 is D2, D2 is configured in such a way that a shortest D2 is shorter than D1, similarly to the holding members 121, 122, and 123.

In the present configuration, similarly, a flow rate of gas that passes through the portion J2 is higher than a flow rate of gas that passes through the portion J1. Therefore, the sample M can be stably levitated near the center point O, and a glass gob having a larger size can be generated. Note that the holding member 124 in the present example can be configured to satisfy Mathematical Formula (3) or Mathematical Formula (4) described above, similarly to the holding members according to the first embodiment and the second embodiment.

<Manufacturing Method>

A method for manufacturing optical glass according to the present embodiment includes a process of blowing gas onto the sample M from a gas injection portion of the holding member described above to levitate the sample M, and melting the sample M by irradiating the levitated sample M with the laser beam L in a gas levitation furnace, and a process of cooling down the molten sample M.

According to the method for manufacturing the optical glass according to the present embodiment, by using the holding member described above, a container does not come into contact with melt (the sample M), and non-uniform nucleation can be avoided at the maximum. Accordingly, a composition that could not be manufactured according to the container method (crucible melting), and contains a small amount of network former oxide or contains no network former oxide can also be vitrified. By employing such a manufacturing method, optical glass of a composition system that could not be vitrified conventionally can be manufactured. Accordingly, optical glass having a high refractive index and a high Abbe number can also be manufactured.

In addition, a flow rate of injection of gas into melt is higher in a peripheral portion than in a center point. Therefore, the melt can be stably levitated near the center point O, and a large-sized glass gob can be made. Specifically, it is preferable that its diameter be 6 mm or more, it is more preferable that the diameter be 6.5 mm or more, and it is further preferable that the diameter be 7 mm or more.

Optical glass obtained by using a manufacturing method according to the present embodiment has many advantages, as described above, and therefore the optical glass can be utilized as a glass material having a high refractive index and low dispersion or a wide-band transmissive material. Specific examples are described below.

<Examples>

Next, the examples described below are described, but the present invention is not limited to the examples described below.

(Making Optical Glass in Each Example)

For optical glass in each example, the glass manufacturing apparatus 1 illustrated in Fig. 1 that includes the gas jet type levitation furnace was used, and the holding member 121 illustrated in Fig. 14 was used. In a structure of the holding member 121 in Examples 1 to 19, the diameter (R) of the concave surface 1210 = 5.5 mm, a maximum depth (H) of the concave surface 1210 = 4.5 mm, a material is a porous body of stainless steel, and a pore diameter is 10 $\mu$m. Furthermore, the radius R1 of the first region P1 of the holding member 121 is 2.1 mm from the center point O, and the radius R2 of the outer circumference of the second region P2 is 5.5 mm from the center point O. Moreover, in a structure of the holding member 121 in Examples 20 to 24, the diameter (R) of the concave surface 1210 = 8.5 mm, a maximum depth (H) of the concave surface 1210 = 6.8 mm, a material is a porous body of stainless steel, and a pore diameter is 10 um. Furthermore, the radius R1 of the first region P1 of the holding member 121 is 5 mm from the center point O, and the radius R2 of the outer circumference of the second region P2 is 8.5 mm from the center point O.

Gas was fed from the gas flow rate regulator 110 connected to the holding member 121 under a condition of 2 to 3 L/minute. In addition, the holding member 121 was used, and therefore the average thickness K1 of the portion J1 of the first region P1, when viewed in a cross section, is greater than the average thickness K2 of the portion J2 of the second region P2.

Then, optical glass was made in conformity with the procedure described below. First, a raw material selected from an oxide, a hydroxide, a carbonate, a nitrate, a sulfate, and the like was weighted to form a predetermined chemical composition, and then the raw material was mixed in an alumina mortar. This raw material was uniaxially pressed at 20 MPa, and was molded into a cylindrical pellet. The obtained pellet was fired at 1000 to 1300°C in an electric furnace, and was fired during 6 to 12 hours in the atmosphere, and a sintered compact was made. The obtained sintered compact was coarsely crushed, and 500 to 600 mg were collected, and were placed in a nozzle of the holding member. Then, carbon dioxide gas laser was applied from the above while oxygen gas was injected, and therefore the raw material was melted. The molten raw material was formed into a spherical shape or an ellipsoidal shape due to the surface tension of the raw material itself, and entered into a levitated state due to the pressure of blown gas. By intercepting a laser output in a state where the raw material had been completely melted, the raw material was cooled down, and a glass gob having a roughly spherical shape having a diameter of 6 mm or more was obtained. In the glass in each of the examples, visually recognizable volatilization was not confirmed during melting, and neither foam nor devitrification was confirmed.

(Making Glass Gob)

In each of the examples, in a case where a glass gob having a roughly spherical shape having a diameter of 6 mm or more could be made, the term "vitrification" is used.

(Measurement of Refractive Index and Abbe Number)

A refractive index of glass was measured by using a prism coupler (from Metricon, the model "2010/M"). A glass sample was polished, a polishing surface was brought into close contact with a single crystal rutile prism, an angle of total reflection at the time of making light of a measurement wavelength incident was measured, and a refractive index was obtained. Measurement was performed at three wavelengths, 473 nm, 594.1 nm, and 656 nm, each five times, and an average value was determined as a measurement value. Moreover, fitting according to a leastsquares method was performed on the obtained actual measurement value by using the Drude-Voigt dispersion formula described below, and a refractive index and an Abbe number ($v_d$) were calculated on a d-line (587.562 nm), an F-line (486.133 nm), and a C-line (656.273 nm).

[Mathematical Formula 1]

$$\frac{1}{n^2 - 1} = \frac{\pi m c^2}{e^2 N f}\left(\frac{1}{\lambda_0^2} - \frac{1}{\lambda^2}\right)$$

(n: refractive index, m: electron mass, c: velocity of light, e: elementary charge, N: the number of molecules per unit volume, f: strength of vibrator, $\lambda_0$: natural resonance wavelength, $\lambda$: wavelength)

Furthermore, the Abbe number ($v_d$) is defied by the mathematical formula described below.

[Mathematical Formula 2]

$$v_d = \frac{n_d - 1}{n_F - n_C}$$

($n_d$: refractive index on d-line, $n_F$: refractive index on F-line, $n_c$: refractive index on C-line)

Each of compositions and physical property values in the respective examples is indicated in each table. Note that the content of each component is based on cationic %, unless otherwise specified.

[Table 1]

|  | Example 1 | Example 2 | Example 3 | Example 4 | Example 5 | Example 6 |
|---|---|---|---|---|---|---|
| $Si^{4+}$ | 16.89 | 12. 52 | 6.89 | 15. 20 | 14.57 | 15.26 |
| $Al^{3+}$ | 20.12 | 21.17 | 30.12 | 20.53 | 20.57 | 18.92 |
| $Ca^{2+}$ |  |  |  |  |  |  |
| $La^{3+}$ | 32.60 | 34.31 | 32.60 | 33.26 | 22.74 | 19.08 |
| $Y^{3+}$ |  |  |  |  |  |  |
| $Gd^{3+}$ | 3.77 | 3.97 | 3.77 | 3.85 |  | 4.73 |
| $Ti^{4+}$ |  |  |  |  |  |  |
| $Zr^{4+}$ | 4.44 | 4.67 | 4.44 | 4.53 | 4.98 | 3.12 |
| $Nb^{5+}$ |  |  |  | 10.20 | 21.07 | 22.06 |
| $Ta^{5+}$ | 22.18 | 23.35 | 22.18 | 12.43 | 16.07 | 16.83 |
| Total | 100.00 | 100.00 | 100.00 | 100.00 | 100.00 | 100.00 |
| Diameter of glass (mm) | 6.0 | 6.0 | 6.1 | 6.0 | 6.2 | 6.4 |
| nd | 1.972 | 1.984 | 1.967 | 2.003 | 2.001 | 2.003 |
| $v$ d | 33.24 | 34.72 | 35.45 | 34.11 | 28.92 | 28.29 |
| Making glass gob (Φ 6 or more) | Vitrification | Vitrification | Vitrification | Vitrification | Vitrification | Vitrification |

[Table 2]

|  | Example 7 | Example 8 | Example 9 | Example 10 | Example 11 | Example 12 |
|---|---|---|---|---|---|---|
| $Si^{4+}$ | 8.18 | 14.80 | 17.17 | 16.84 | 7.79 | 8.66 |
| $Al^{3+}$ | 22.11 | 22.20 | 17.94 | 17.15 | 21.06 | 20.86 |

(continued)

|  | Example 7 | Example 8 | Example 9 | Example 10 | Example 11 | Example 12 |
|---|---|---|---|---|---|---|
| Ca$^{2+}$ |  |  |  |  |  |  |
| La$^{3+}$ | 39.97 | 18.90 | 30.48 | 30.33 | 38.07 | 37.71 |
| Y$^{3+}$ |  |  |  |  |  |  |
| Gd$^{3+}$ |  |  |  |  |  |  |
| Ti$^{4+}$ |  | 37.80 | 24.41 | 17.88 |  |  |
| Zr$^{4+}$ | 5.35 | 6.30 | 5.58 | 8.48 | 9.86 | 9.77 |
| Nb$^{5+}$ | 10.99 |  | 4.43 | 9.32 | 10.47 | 5.65 |
| Ta$^{5+}$ | 13.39 |  |  |  | 12.75 | 17.35 |
| Total | 100.00 | 100.00 | 100.00 | 100.00 | 100.00 | 100.00 |
| Diameter of glass (mm) | 6.5 | 6.5 | 6.3 | 6.8 | 6.5 | 6.3 |
| nd | 2.000 | 2.039 | 2.002 | 2.005 | 2.012 | 2.001 |
| $\nu$ d | 32.35 | 22.91 | 27.53 | 27.76 | 32.06 | 33.03 |
| Making glass gob (Φ 6 or more) | Vitrification | Vitrification | Vitrification | Vitrification | Vitrification | Vitrification |

[Table 3]

|  | Example 13 | Example 14 | Example 15 | Example 16 | Example 17 | Example 18 |
|---|---|---|---|---|---|---|
| Si$^{4+}$ | 9.45 | 8.02 | 7.44 | 10.60 | 7.79 | 16.77 |
| Al$^{3+}$ | 21.25 | 21.68 | 20.10 | 20.10 | 21.04 | 17.07 |
| Ca$^{2+}$ |  |  |  |  |  |  |
| La$^{3+}$ | 37.08 | 39.19 | 36.34 | 34.76 | 40.96 | 31.45 |
| Y$^{3+}$ |  |  |  |  |  |  |
| Gd$^{3+}$ |  |  |  |  |  |  |
| Ti$^{4+}$ |  |  |  |  |  | 17.39 |
| Zr$^{4+}$ | 9.60 | 10.15 | 13.96 | 13.35 | 9.85 | 8.24 |
| Nb$^{5+}$ | 10.20 | 7.83 | 9.99 | 9.56 | 7.61 | 9.07 |
| Ta$^{5+}$ | 12.42 | 13.13 | 12.17 | 11.64 | 12.74 |  |
| Total | 100.00 | 100.00 | 100.00 | 100.00 | 100.00 | 100.00 |
| Diameter of glass (mm) | 6.5 | 6.6 | 6.5 | 6.5 | 6.5 | 6.6 |
| nd | 2.001 | 1.998 | 2.022 | 2.002 | 2.001 | 2.001 |
| $\nu$ d | 32.36 | 32.92 | 32.03 | 32.67 | 33.00 | 27.94 |
| Making glass gob (Φ 6 or more) | Vitrification | Vitrification | Vitrification | Vitrification | Vitrification | Vitrification |

[Table 4]

|  | Example 19 | Example 20 | Example 21 | Example 22 | Example 23 | Example 24 |
|---|---|---|---|---|---|---|
| Si$^{4+}$ | 15.78 | 16.72 | 16.72 | 16.72 | 15.79 | 15.79 |
| Al$^{3+}$ | 17.70 | 18.13 | 18.13 | 18.13 | 17.12 | 17.12 |

(continued)

|  | Example 19 | Example 20 | Example 21 | Example 22 | Example 23 | Example 24 |
|---|---|---|---|---|---|---|
| $Ca^{2+}$ |  |  |  |  |  |  |
| $La^{3+}$ | 31.39 | 29.15 | 29.15 | 29.15 | 27.52 | 27.52 |
| $Y^{3+}$ |  |  |  |  | 2.87 | 2.87 |
| $Gd^{3+}$ |  |  |  |  |  |  |
| $Ti^{4+}$ | 15.74 | 16.13 | 16.13 | 16.13 | 28.30 | 28.30 |
| $Zr^{4+}$ | 8.68 | 8.89 | 8.89 | 8.89 | 8.40 | 8.40 |
| $Nb^{5+}$ | 9.14 | 9.37 | 9.37 | 9.37 |  |  |
| $Ta^{5+}$ | 1.58 | 1.61 | 1.61 | 1.61 |  |  |
| Total | 100.00 | 100.00 | 100.00 | 100.00 | 100.00 | 100.00 |
| Diameter of glass (mm) | 6.6 | 8.3 | 9.3 | 9.9 | 9.9 | 10.3 |
| nd | 2.005 | 2.000 | 2.000 | 2.000 | 2.019 | 2.019 |
| $\nu$ d | 28.35 | 28.00 | 28.00 | 28.00 | 26.56 | 26.56 |
| Making glass gob ($\Phi$ 6 or more) | Vitrification | Vitrification | Vitrification | Vitrification | Vitrification | Vitrification |

As is apparent from the above, it has been confirmed that by employing a manufacturing method in each of the examples, a large-sized glass gob can be stably made, and obtained optical glass has a high refractive index, low dispersion, and devitrification resistance at a high level.

Reference Signs List

1 Glass manufacturing apparatus
101 Stage
102, 111, 112, 113, 114, 121, 122, 123, 124 Holding member
103 Laser light source
104, 105 Mirror
106 Radiation thermometer
107 Computer
108 CCD camera
109 Monitor
110 Gas flow rate regulator
1020, 1110, 1120, 1130, 1140, 1210, 1220, 1230, 1240 Concave surface
1022, 1022a, 1022b, 1022c, 1022d, 1112, 1122, 1132, 1142 Introduction port
1024, 1024a, 1024b, 1024c, 1024d, 1024x, 1024y, 1114, 1124,
1134, 1144, 1149a, 1224 Injection port
1126 Non-porous portion
1128 Porous portion
1136, 1138, 1141, 1149 Member
H Maximum depth
S1 First surface
S2 Second surface
S3 Side surface
L Laser beam
M Sample
O Center point
C1 First circle
C2 Second circle

C3 Third circle
P1 First region
P2 Second region
J1, J2, Q1, Q2 Portion
R, R1, R2, R3 Radius

**Claims**

1. A holding member that is used in a glass manufacturing apparatus that cools down a glass raw material that has been levitated by gas and has been heated and melted, and manufactures glass, wherein

   the holding member includes a gas injection surface that includes a plurality of injection ports from which the gas is injected,
   the gas injection surface includes a first region and a second region, the first region including first injection ports that are some injection ports of the plurality of injection ports, the second region including second injection ports that are different from the first injection ports from among the plurality of injection ports,
   the first region is located inside the second region, when the gas injection surface is viewed from a top,
   an area of the injection ports per unit area of the first region is smaller than the area of the injection ports per the unit area of the second region,
   the area of the injection ports per the unit area of the first region is a ratio of a total of cross-sectional areas of the first injection ports to the area of the first region when the gas injection surface is viewed from the top, and
   the area of the injection ports per the unit area of the second region is the ratio of the total of the cross-sectional areas of the second injection ports to the area of the second region when the gas injection surface is viewed from the top.

2. A holding member that is used in a glass manufacturing apparatus that cools down a glass raw material that has been levitated by gas and has been heated and melted, and manufactures glass, wherein

   the holding member includes a gas injection surface that includes a plurality of injection ports from which the gas is injected,
   the gas injection surface includes a first region and a second region, the first region including first injection ports that are some injection ports of the plurality of injection ports, the second region including second injection ports that are different from the first injection ports from among the plurality of injection ports,
   the first region is located inside the second region, when the gas injection surface is viewed from a top,
   a number of the injection ports per unit area of the first region is smaller than the number of the injection ports per the unit area of the second region,
   the number of the injection ports per the unit area of the first region is a ratio of the number of the first injection ports to an area of the first region when the gas injection surface is viewed from the top, and
   the number of the injection ports per the unit area of the second region is the ratio of the number of the second injection ports to the area of the second region when the gas injection surface is viewed from the top.

3. The holding member according to claim 2, wherein

   the area of the injection ports per the unit area of the first region is smaller than the area of the injection ports per the unit are of the second region,
   the area of the injection ports per the unit area of the first region is the ratio of a total of cross-sectional areas of the injection ports included in the first region to the area of the first region when the gas injection surface is viewed from the top, and
   the area of the injection ports per the unit area of the second region is the ratio of the total of the cross sectional areas of the injection ports included in the second region to the area of the second region when the gas injection surface is viewed from the top.

4. The holding member according to claim 1 or 3, wherein
   the ratio (W1/W2) of the area (W1) of the injection ports per the unit area of the first region to the area (W2) of the injection ports per the unit area of the second region is 0.05 to 0.7.

5. The holding member according to any one of claims 2 to 4, wherein

the ratio (T1/T2) of the number (T1) of the injection ports per the unit area of the first region to the number (T2) of the injection ports per the unit area of the second region is 0.05 to 0.5.

6. A holding member that is used in a glass manufacturing apparatus that cools down a glass raw material that has been levitated by gas and has been heated and melted, and manufactures glass, wherein

the holding member includes a gas introduction surface and a gas injection surface, the gas introduction surface including an introduction port from which the gas is introduced, the gas injection surface including a plurality of injection ports from which the gas that has been introduced from the gas introduction surface is injected,
the gas injection surface includes a first region and a second region, the first region including first injection ports that are some injection ports of the plurality of injection ports, the second region including second injection ports that are different from the first injection ports from among the plurality of injection ports,
the first region is located inside the second region, when the gas injection surface is viewed from a top, and
the gas introduction surface has a protruding shape.

7. The holding member according to claim 6, wherein

the holding member includes a first portion and a second portion, the first portion being surrounded by a surface including a straight line that is perpendicularly drawn from the first region to the gas introduction surface, the second portion being surrounded by the surface including the straight line that is drawn from the second region to the gas introduction surface in a perpendicular direction, and
a portion where a thickness of the first portion is greater than the thickness of the second portion is included, the thickness of the first portion being a length of the straight line that is drawn from a point in the first region to the gas introduction surface in a gravity direction, the thickness of the second portion being the length of the straight line that is drawn from the point in the second region to the gas introduction surface in the gravity direction.

8. The holding member according to claim 7, wherein
a ratio (K2/K1) of an average thickness (K2) of the thickness of the second portion to the average thickness (K1) of the thickness of the first portion is preferably 0.5 to 0.95.

9. The holding member according to claim 6, wherein
an average thickness (K1) of the holding member between the first region and the gas introduction surface is greater than the average thickness (K2) of the holding member between the second region and the gas introduction surface.

10. The holding member according to claim 9, wherein
a ratio (K2/K1) of the average thickness (K2) of the holding member between the second region and the gas introduction surface to the average thickness (K1) of the holding member between the first region and the gas introduction surface is 0.5 to 0.95.

11. A holding member that is used in a glass manufacturing apparatus that cools down a glass raw material that has been levitated by gas and has been heated and melted, and manufactures glass, wherein

the holding member includes a gas introduction surface and a gas injection surface, the gas introduction surface including an introduction port from which the gas is introduced, the gas injection surface including a first region and a second region, the first region including a plurality of injection ports from which the gas that has been introduced from the gas introduction surface is injected, the second region including an injection port from which the gas is injected,
the first region is located inside the second region, when the gas injection surface is viewed from a top,
the holding member includes a first portion and a second portion, the first portion being surrounded by a surface including a straight line that is perpendicularly drawn from the first region to the gas introduction surface, the second portion being surrounded by the surface including the straight line that is drawn from the second region to the gas introduction surface in a perpendicular direction, and
a portion where a thickness of the first portion is greater than the thickness of the second portion is included, the thickness of the first portion being a length of the straight line that is drawn from a point in the first region to the gas introduction surface in a gravity direction, the thickness of the second portion being the length of the straight line that is drawn from the point in the second region to the gas introduction surface in the gravity direction.

12. The holding member according to claim 11, wherein

a ratio (K2/K1) of an average thickness (K2) of the thickness of the second portion to the average thickness (K1) of the thickness of the first portion is preferably 0.5 to 0.95.

13. A holding member that is used in a glass manufacturing apparatus that cools down a glass raw material that has been levitated by gas and has been heated and melted, and manufactures glass, wherein

the holding member includes a gas introduction surface and a gas injection surface, the gas introduction surface including an introduction port from which the gas is introduced, the gas injection surface including a first region and a second region, the first region including a plurality of injection ports from which the gas that has been introduced from the gas introduction surface is injected, the second region including an injection port from which the gas is injected,
the first region is located inside the second region, when the gas injection surface is viewed from a top, and an average thickness (K1) of the holding member between the first region and the gas introduction surface is greater than the average thickness (K2) of the holding member between the second region and the gas introduction surface.

14. The holding member according to claim 13, wherein
a ratio (K2/K1) of the average thickness (K2) of the holding member between the second region and the gas introduction surface to the average thickness (K1) of the holding member between the first region and the gas introduction surface is 0.5 to 0.95.

15. The holding member according to any one of claims 6 to 14, wherein
an area of the injection ports per unit area of the first region of the gas injection surface is smaller than the area of the injection ports per the unit area of the second region when the gas injection surface is viewed from the top.

16. The holding member according to claim 15, wherein

the area of the injection ports per the unit area of the first region is a ratio of a total of cross-sectional areas of the injection ports included in the first region to the area of the first region when the gas injection surface is viewed from the top, and
the area of the injection ports per the unit area of the second region is the ratio of the total of the cross-sectional areas of the injection ports included in the second region to the area of the second region when the gas injection surface is viewed from the top.

17. The holding member according to claim 15 or 16, wherein
the ratio (W1/W2) of the area (W1) of the injection ports per the unit area of the first region to the area (W2) of the injection ports per the unit area of the second region is 0.05 to 0.7.

18. The holding member according to any one of claims 6 to 17, wherein

a number of the injection ports per unit area of the first region of the gas injection surface is smaller than the number of the injection ports per the unit area of the second region when the gas injection surface is viewed from the top,
the first region includes the first injection ports that are the some injection ports of the plurality of injection ports, the second region includes the second injection ports that are different from the first injection ports from among the plurality of injection ports,
the number of the injection ports per the unit area of the first region is a ratio of the number of the first injection ports to an area of the first region when the gas injection surface is viewed from the top, and
the number of the injection ports per the unit area of the second region is the ratio of the number of the second injection ports to the area of the second region when the gas injection surface is viewed from the top.

19. The holding member according to claim 18, wherein
the ratio (T1/T2) of the number (T1) of the injection ports per the unit area of the first region to the number (T2) of the injection ports per the unit area of the second region is 0.05 to 0.5.

20. The holding member according to any one of claims 1 to 19, wherein
at least part of the holding member includes at least one kind selected from a group consisting of stainless steel (SUS), silicon carbide (SiC), alumina ($Al_2O_3$), zirconia ($ZrO_2$), duralumin, copper (Cu), and carbon (C).

21. The holding member according to any one of claims 1 to 20, wherein

   a radius of the injection port of the first region is 0.2 mm or less, and
   the radius of the injection port of the second region is 0.5 mm or less.

22. The holding member according to any one of claims 1 to 19, wherein
    at least part of the holding member is porous.

23. The holding member according to any one of claims 1 to 22, wherein
    the holding member includes a porous member, and a porosity of the porous member in a portion that corresponds to the first region is lower than the porosity of the porous member in the portion that corresponds to the second region.

24. The holding member according to claim 22 or 23, wherein
    the holding member includes a member made of a porous material and a member made of a metal material in at least part of the holding member.

25. The holding member according to any one of claims 22 to 24, wherein
    a pore diameter of a portion that is porous is 100 $\mu$m or less.

26. The holding member according to any one of claims 1 to 25, wherein
    the gas is injected in a roughly horizontal direction that is roughly orthogonal to a gravity direction.

27. The holding member according to any one of claims 1 to 26, wherein
    the holding member includes an injection port from which the gas is injected in a roughly horizontal direction that is roughly orthogonal to a gravity direction, above the gas injection surface.

28. The holding member according to any one of claims 1 to 27, wherein
    the gas injection surface is a roughly circular region, when the holding member is viewed from the top.

29. The holding member according to any one of claims 1 to 28, wherein
    the first region is a region that includes a center or a center of gravity, when the gas injection surface is viewed from the top.

30. The holding member according to any one of claims 1 to 29, wherein

   the first region is a region that is at least part of a roughly circular region for which a radius from a center point is r (r < R, R is the radius of the gas injection surface when the gas injection surface is viewed from the top) or less, and
   the second region is the region that is at least part of a roughly annular region for which the radius of an inner circumference is r or more, when the gas injection surface is viewed from the top.

31. The holding member according to any one of claims 1 to 30, wherein

   the first region is a region that is at least part of a roughly circular region for which a radius from a center point is 0.2R or less in comparison with the radius (R) of the gas injection surface when the gas injection surface is viewed from the top,
   the second region is the region that is at least part of a roughly annular region, when the gas injection surface is viewed from the top, and
   the radius of an inner circumference of the roughly annular region is 0.2R or more in comparison with the radius (R) of the gas injection surface.

32. The holding member according to claim 31, wherein
    the radius of an outer circumference of the roughly annular region is 0.9R or less in comparison with the radius (R) of the gas injection surface.

33. The holding member according to any one of claims 1 to 30, wherein
    the first region is a region that is at least part of a roughly circular region for which a radius from a center point is 0.2R or less in comparison with the radius (R) of the gas injection surface when the gas injection surface is viewed from the top.

34. The holding member according to any one of claims 1 to 31, wherein

the second region is a region that is at least part of a roughly annular region, when the gas injection surface is viewed from the top,
a radius of an inner circumference of the roughly annular region is 0.4R or more in comparison with the radius (R) of the gas injection surface, and
the radius of an outer circumference of the roughly annular region is 0.9R or less in comparison with the radius (R) of the gas injection surface.

35. The holding member according to any one of claims 1 to 34, wherein
the first region is a region that is at least part of a roughly circular region for which a radius from a center point is 3 mm or less, when the gas injection surface is viewed from the top.

36. The holding member according to any one of claims 1 to 35, wherein

the second region is a region that is at least part of a roughly annular region, when the gas injection surface is viewed from the top,
a radius of an inner circumference of the roughly annular region is 3 mm or more, and
the radius of an outer circumference of the roughly annular region is 9 mm or less.

37. The holding member according to any one of claims 1 to 36, wherein

the gas injection surface concentrically includes a region of a first circle, the region of a second circle, and the region of a third circle, when viewed from the top, the second circle having a radius that is larger than or equal to the radius of the first circle, the third circle having the radius that is larger than the radius of the second circle,
the first region is the region that is at least part of the region of the first circle, and
the second region is the region that is at least part of a roughly annular region obtained by excluding the region of the second circle from the region of the third circle.

38. The holding member according to any one of claims 1 to 37, wherein
the second region is not adjacent to the first region.

39. The holding member according to any one of claims 1 to 38, wherein
a gas introduction surface is provided on a side surface of the holding member or on an opposite side of the gas injection surface, the gas introduction surface including an introduction port from which the gas is introduced.

40. The holding member according to claim 39, wherein
the plurality of injection ports included on the gas injection surface is respectively connected to a plurality of the introduction ports.

41. The holding member according to claim 39, wherein
at least one of the plurality of injection ports included on the gas injection surface is connected to a plurality of the injection ports.

42. The holding member according to any one of claims 1 to 41, wherein
a radius (R) of the gas injection surface is 5 to 10 mm, when the gas injection surface is viewed from the top.

43. The holding member according to any one of claims 1 to 42, wherein
a maximum depth (H) of the gas injection surface is 4 to 10 mm, when viewed in a cross section of the gas injection surface.

44. A glass manufacturing apparatus comprising the holding member according to any one of claims 1 to 43.

45. A glass manufacturing method comprising:

a levitation process for blowing the gas onto the glass raw material from the injection ports of the holding member according to any one of claims 1 to 43, and levitating the glass raw material;
a melting process for melting the glass raw material by irradiating the glass raw material that has been levitated with a laser beam; and
a cooling process for cooling down the glass raw material that has been melted.

FIG.1

FIG.2

# FIG.3

FIG.4

FIG.5

gas

FIG.6

FIG.7

FIG.8

FIG.9

R1

R

R2

R3

O

1020

C2

P1

C1

P2= C3-C2

C3

FIG.10

S1    1114                        111

P2    P2

P1   1110

S3                                S3

Q2

S2        Q1        1112          Q2

gas

FIG.11

gas

FIG.12

gas

# FIG.13

1149     1149a    M    1149

114

P2              P2

1141

1140     P1

1142

gas

FIG.14

FIG.15

FIG.16

FIG.17

## INTERNATIONAL SEARCH REPORT

| International application No. |
| --- |
| **PCT/JP2021/044446** |

**A. CLASSIFICATION OF SUBJECT MATTER**

*C03B 8/00*(2006.01)i; *C03B 19/00*(2006.01)i
FI: C03B8/00 Z; C03B19/00 Z

According to International Patent Classification (IPC) or to both national classification and IPC

**B. FIELDS SEARCHED**

Minimum documentation searched (classification system followed by classification symbols)

C03B8/00; C03B19/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2020-186146 A (CANON KK) 19 November 2020 (2020-11-19) | 1-21, 26, 28-45 |
| | paragraphs [0011]-[0017], [0021]-[0022], [0029], fig. 1-2, 4, 6 | |
| Y | | 22-25, 27 |
| X | JP 2017-193459 A (NIPPON ELECTRIC GLASS CO) 26 October 2017 (2017-10-26) | 6-14, 20-25, 28-45 |
| | claims, paragraphs [0041]-[0044], [0048]-[0051], fig. 6 | |
| Y | | 22-27 |
| A | | 1-5, 15-19 |
| Y | WO 2016/009882 A1 (NIPPON ELECTRIC GLASS CO) 21 January 2016 (2016-01-21) | 26-27 |
| | paragraphs [0008]-[0013] | |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 February 2022** | **22 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/044446**

| Patent document cited in search report | | | Publication date (day/month/year) | Patent family member(s) | Publication date (day/month/year) |
|---|---|---|---|---|---|
| JP | 2020-186146 | A | 19 November 2020 | (Family: none) | |
| JP | 2017-193459 | A | 26 October 2017 | (Family: none) | |
| WO | 2016/009882 | A1 | 21 January 2016 | US 2017/0190605 A1 paragraphs [0008]-[0013] CN 106103364 A | |

Form PCT/ISA/210 (patent family annex) (January 2015)

**EP 4 257 561 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020202124 A

- JP 2014196236 A